(19) Europäisches Patentamt
European Patent Office
Office européen des brevets

(11) **EP 3 669 230 B1**

(12) **EUROPÄISCHE PATENTSCHRIFT**

(45) Veröffentlichungstag und Bekanntmachung des Hinweises auf die Patenterteilung:
**25.01.2023   Patentblatt 2023/04**

(21) Anmeldenummer: **18758555.9**

(22) Anmeldetag: **09.08.2018**

(51) Internationale Patentklassifikation (IPC):
**G02C 7/02** (2006.01)        **G02C 7/06** (2006.01)

(52) Gemeinsame Patentklassifikation (CPC):
**G02C 7/028; G02C 7/061;** G02C 2202/22

(86) Internationale Anmeldenummer:
**PCT/EP2018/071628**

(87) Internationale Veröffentlichungsnummer:
**WO 2019/034525 (21.02.2019 Gazette 2019/08)**

(54) **OPTIMIERUNG EINES BRILLENGLASES UNTER BERÜCKSICHTIGUNG EINES VISUSMODELLS**

OPTIMIZING A SPECTACLE LENS TAKING ACCOUNT OF A VISION MODEL

OPTIMISATION D'UN VERRE DE LUNETTES PRENANT EN COMPTE UN MODÈLE D'ACUITÉ VISUELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.08.2017   DE 102017007663**

(43) Veröffentlichungstag der Anmeldung:
**24.06.2020   Patentblatt 2020/26**

(73) Patentinhaber: **Rodenstock GmbH
80687 München (DE)**

(72) Erfinder:
• **BECKEN, Wolfgang
82061 Neuried (DE)**
• **ALTHEIMER, Helmut
87650 Baisweil-Lauchdorf (DE)**
• **MUSCHIELOK, Adam
81369 München (DE)**
• **BÉNARD, Yohann
81541 München (DE)**
• **SEIDEMANN, Anne
81375 München (DE)**
• **WELK, Andrea
81547 München (DE)**
• **ESSER, Gregor
80686 München (DE)**

(74) Vertreter: **Müller-Boré & Partner
Patentanwälte PartG mbB
Friedenheimer Brücke 21
80639 München (DE)**

(56) Entgegenhaltungen:
US-A1- 2004 027 679    US-A1- 2012 229 758
US-A1- 2015 002 810    US-A1- 2016 011 437

**Beschreibung**

Die Offenlegungsschrift WO 2013/104548 A1 beschreibt eine Optimierung eines Brillenglases, welche auf denjenigen Wellenfronten basiert, die bei der direkten Durchrechnung von Licht durch das Auge bestimmt werden. Die Wellenfronten werden statt wie üblich an der Scheitelpunktkugel (SPK) an einer Ebene im Auge ausgewertet und hängen somit von den Eigenschaften des Auges ab. Mit diesem Verfahren kann der Einfluss der Cornea und auch aller anderen individuellen Eigenschaften des Auges wie z.B. die Abweichungen der Vorderkammertiefe oder anderer Geometrieparameter vom Bevölkerungsdurchschnitt, direkt über die Wellenfronten in die Optimierung des Brillenglases eingehen. Basis für diese Optimierungsmethode ist eine Zielfunktion, die außer von den durchgerechneten Wellenfronteigenschaften (inklusive deren Aberrationen höherer Ordnung (HOA)) auch von Sollvorgaben und Gewichtungen abhängt, die für bestimmte Eigenschaften der Wellenfronten im Auge gefordert werden können.

Unter Sollvorgaben sind hierbei nicht nur die im Idealfall gewünschten Referenz-Wellenfronten für Vollkorrektion zu verstehen, sondern auch Vorgaben für gezielte Abweichungen, wie beispielsweise Vorgaben für die Größenordnung des unerwünschten Astigmatismus. In der praktischen Anwendung kann man dann durch geeignete Wahl dieser Sollvorgaben und Gewichte/Gewichtungen die Optimierung des Brillenglases steuern.

Die Offenlegungsschrift WO 2013/104548 A1 beschreibt jedoch nicht, welche Art der Sollvorgaben und Gewichte zu geeigneten Brillengläsern führen. Es hat sich jedoch herausgestellt, dass wenn für die Optimierung die identischen Sollvorgaben und Gewichte wie an der Scheitelpunktkugel verwendet werden, sich vollkommen andere Designs ergeben, deren Nutzen ohne weitere aufwendige Überprüfung nicht sicherzustellen ist. Daher wäre dann ein völlig neuer Aufbau sinnvoller Sollvorgaben und Gewichte für die Optimierung im Auge erforderlich. Wie am Stand der Technik für Optimierungen an der Scheitelpunktkugel zu erkennen ist, sind neue erfinderische Schritte nötig, um sinnvolle Sollvorgaben und Gewichte überhaupt erst aufzustellen.

Der Durchschnittsfachmann stünde also mit den Mitteln des Standes der Technik vor der Wahl, entweder die Wellendurchrechnung in das Auge durchzuführen und von Null an neue Erfahrungen zum Auffinden geeigneter Sollvorgaben und Gewichte zu erlangen, oder den Stand der Technik für Sollvorgaben und Gewichte zu nutzen, letztlich dann aber doch damit an der Scheitelpunktkugel zu optimieren.

Darüber hinaus führt die vorgeschlagene Wellenfrontdurchrechnung zwar einen Fortschritt bezüglich der bestmöglichen Auswerteebene herbei, jedoch führt dieser ohne ein passendes Kriterium zur Beurteilung der Wellenfrontabweichung möglicherweise nicht zu einer Verbesserung der Wahrnehmung beim Blick durch die Brille.

Die Druckschrift US 2004/0027679 beschreibt ein Verfahren zum Entwerfen und Optimieren eines individuellen Brillenglases. Bei diesem Verfahren erfolgt zunächst ein Entwurf eines Designs durch einen Augenoptiker am Bildschirmarbeitsplatz mittels eines Computerprogramms. Das entworfene Design wird einem Hersteller übermittelt. Der Hersteller optimiert das individuelle Brillenglas anhand der übermittelten Vorgaben.

Die Druckschrift US 2016/0011437 beschreibt ein Verfahren zum Entwerfen und Optimieren eines individuellen Brillenglases, bei dem die Position des Augendrehpunkts des Brillenträgers sowie die Blickrichtungen beim Betrachten eines Zielobjekts berücksichtigt werden.

Die Druckschrift US 2012/0229758 A1 beschreibt ein Verfahren zum Bestimmen eines Brillenglases. Das Verfahren umfasst ein Vermessen des Visus eines Brillenträgers bei einer im Wesentlichen vollständigen Korrektur der Aberrationen niedrigerer Ordnung und ein Bestimmen oder Auswählen eines Designs für das Brillenglas mittels Anpassen des residualen Astigmatismus anhand des gemessenen Visus.

Vor diesem Hintergrund ist es eine Aufgabe der vorliegenden Erfindung, die obigen Nachteile des Standes der Technik zu überwinden. Eine weitere Aufgabe ist es, entweder vorhandene Visusmodelle zu verwenden oder neue Visusmodelle aufzustellen sowie eine Vorschrift anzugeben, wie diese in Verbindung mit der Transformation der Sollvorgaben und Gewichte in die Zielfunktion einer Optimierung aufzunehmen ist. Diese Aufgaben werden durch die in den unabhängigen Ansprüchen angegebenen Merkmalen gelöst.

Ein erster Aspekt der Erfindung betrifft ein computerimplementiertes Verfahren zum Berechnen (z.B. zum Optimieren) eines Brillenglases für ein Auge eines Brillenträgers umfassend die Schritte:

a) Bereitstellen einer Zuordnung zumindest einer Abbildungseigenschaft bzw. Aberration eines Brillenglassystems zum Visus des Brillenträgers oder eines durchschnittlichen Brillenträgers beim Betrachten eines Objekts durch das Brillenglassystem,

b) Bestimmen oder Vorgeben einer Ziel- bzw. Gütefunktion für das zu berechnende Brillenglas, in welcher die Zuordnung aus Schritt a) auszuwerten ist bzw. welche von dem zugeordneten Visus-Wert abhängt,

c) Berechnen des zu berechnenden Brillenglases durch Auswerten der Zielfunktion, wobei die Zielfunktion mindestens einmal, vorzugsweise mehrmals ausgewertet wird. Das Berechnen kann insbesondere mittels eines Optimierungsverfahrens erfolgen, bei dem die Zielfunktion iterativ minimiert oder maximiert wird.

Es ist auch möglich, anhand der bereitgestellten Zuordnung aus dem obigen Schritt a), ein Bewerten eines Brillenglases durchzuführen, ohne dass notwendigerweise ein Berechnen oder ein Optimieren des Brillenglases durchgeführt werden müsste. Das Bewerten des Brillenglases kann z.B. zur Qualitätskontrolle erfolgen. Das zu bewertende Brillenglas kann z.B. anhand von theoretischen Flächenwerten und/oder anhand von Flächenmesswerten beschrieben bzw. vorgegeben werden.

Ein zweiter Aspekt der Erfindung betrifft somit ein computerimplementiertes Verfahren zum Bewerten eines Brillenglases für ein Brillenträger umfassend die Schritte:

a) Bereitstellen einer Zuordnung zumindest einer Abbildungseigenschaft bzw. Aberration eines Brillenglassystems zum Visus des Brillenträgers oder eines durchschnittlichen Brillenträgers beim Betrachten eines Objekts durch das Brillenglassystem,
b) Bestimmen oder Vorgeben einer Ziel- bzw. Gütefunktion für das zu bewertende Brillenglas, in welcher die Zuordnung aus Schritt a) auszuwerten ist bzw. welche von dem zugeordneten Visus-Wert abhängt,
c) Bewerten des Brillenglases durch Auswerten der Ziel- bzw. der Gütefunktion, wobei die Ziel- bzw. Gütefunktion mindestens einmal ausgewertet wird.

Im obigen Schritt a) kann die Zuordnung an mehreren Bewertungsstellen bzw. Bewertungspunkten auf einer Auswertefläche vorgegeben werden. Im obigen Schritt c) kann die Ziel- bzw. Gütefunktion in mehreren Bewertungsstellen bzw. Bewertungspunkten auf einer Auswertefläche ausgewertet werden. Das Auswerten der Zielfunktion kann ein Berechnen der zumindest einen Abbildungseigenschaft bzw. Aberration des zu berechnenden oder des zu bewertenden Brillenglases in der Mehrzahl von Bewertungspunkten umfassen.

Bei den Verfahren zum Optimieren eines Brillenglases nach dem Stand der Technik wird ein Brillenglas durch Minimieren oder Maximieren einer Zielfunktion, in welcher tatsächliche (Ist) Werte und entsprechende Sollwerte zumindest einer Abbildungseigenschaft bzw. Aberration des Brillenglases eingehen, optimiert. Die zumindest eine Abbildungseigenschaft bzw. Aberration kann eine direkte Quantifizierung einer Wellenfrontabweichung von einer Referenzwellenfront darstellen. Eine beispielhafte Zielfunktion ist z.B. die Funktion:

$$ F = \sum_i \left[ G_{R,i} \left( R_{Ist}(i) - R_{Soll}(i) \right)^2 + G_{A,i} \left( A_{Ist}(i) - A_{SPK,Soll}(i) \right)^2 + \dots \right], $$

wobei:

$i(i = 1$ bis N) eine Bewertungsstelle des Brillenglases bezeichnet;
$R_{Ist}(i)$ die tatsächliche sphärische Wirkung oder den Refraktionsfehler an der *i*-ten Bewertungsstelle bezeichnet;
$R_{Ist}(i)$ die sphärische Sollwirkung oder den Soll-Refraktionsfehler an der *i*-ten Bewertungsstelle bezeichnet;
$Ast_{Ist}(i)$ den Astigmatismus oder den astigmatischen Fehler an der *i*-ten Bewertungsstelle bezeichnet;
$Ast_{Soll}(i)$ den Soll-Astigmatismus oder den Soll-astigmatischen Fehler an der *i*-ten Bewertungsstelle bezeichnet.

Die Größen $G_{R,i}, G_{A,i}, \dots$ sind Gewichte der jeweiligen Abbildungseigenschaft bzw. Aberration, die in der Optimierung benutzt werden.
Die Abbildungseigenschaften bzw. Aberrationen des Brillenglases können an der Scheitelpunktkugel oder an einer Auswerteebene oder Auswertefläche im Auge ausgewertet werden, wie z.B. in WO 2015/104548 A1 beschrieben.
Anhand der obigen Zielfunktion kann ebenfalls ein Bewerten eines Brillenglases erfolgen, wobei der tatsächliche Wert der zumindest einen Abbildungseigenschaft des zu bewertenden Brillenglases an zumindest einer Bewertungsstelle des zu bewertenden Brillenglases berechnet und mit dem entsprechenden Sollwert verglichen wird.
Es ist jedoch erkannt worden, dass eine direkte Quantifizierung einer Wellenfrontabweichung in Dioptrien ohne Berücksichtigung der wirksamen Pupillengröße wegen der davon abhängigen Schärfentiefe nicht das bestmögliche Kriterium ist, um die Wahrnehmung eines Brillenträgers durch ein Brillenglas zu beschreiben und zu beurteilen.
Gemäß den obigen Aspekten der Erfindung wird im Gegensatz zu den konventionellen Optimierungs- oder Bewertungsverfahren vorgeschlagen, in der Ziel- bzw. Gütefunktion direkt den Visus (Sehschärfe) zu berücksichtigen. Der in die Ziel- bzw. Gütefunktion eingehender Visus hängt über eine Zuordnung von zumindest einer Abbildungseigenschaft bzw. Aberration eines Brillenglassystems ab, wobei die zumindest eine Abbildungseigenschaft bzw. Aberration an einer geeigneten Auswertefläche (z.B. an der Scheitelpunktkugel oder im Auge) ausgewertet werden kann. Das Brillenglassystem kann aus zumindest einem Brillenglas (z.B. ein Brillenglas einer Refraktionsbrille) bestehen. Vorzugsweise umfasst das Brillenglassystem weitere Komponente, wie z.B. ein Modellauge bzw. Augenmodell, welches auf durchschnittlichen Werten von Brillenträgern oder auf zumindest einem individuellen Parameter des Auges des Brillenträgers basieren kann. Anders ausgedrückt kann das Brillenglassystem, welches der Zuordnung zumindest einer Abbildungseigenschaft bzw. Aberration zum Visus des Brillenträgers zugrunde liegt, ein Brillenglas-Auge System sein.

Das Modelauge ist vorzugsweise ebenfalls Bestandteil der Gebrauchsstellung, die bei dem Berechnen des zu berechnenden (z.B. des zu optimierenden) Brillenglases oder bei der Bewertung des zu bewertenden Brillenglases berücksichtigt wird. Die Gebrauchsstellung kann ebenfalls durch weitere durchschnittliche oder individuelle Parameter wie Hornhautscheitelabstand (HSA), Vorneigung, Pupillendistanz, etc, charakterisiert werden.

Die Ziel- bzw. Gütefunktion, die vom Visus $V$ über die Zuordnung der zumindest einen Abbildungseigenschaft bzw. Aberration $\Delta U_{s,j}$ zum Visus des Brillenträgers oder eines durchschnittlichen Brillenträgers abhängt, weist die folgende Struktur auf:

$$F_s = \sum_i \left[ G^V_{s,j,i} \left( V_{Ist}\left(\Delta U_{s,j}(i)\right) - V_{Soll}\left(\Delta U_{s,j}(i)\right)\right)^2 + ... \right],$$

In der obigen Formel bezeichnet $V(\Delta U_{s,j}(i))$ eine Funktion, welche die Abhängigkeit des Visus von zumindest einer Abbildungseigenschaft bzw. Aberration eines Brillenglassystems an der $i$-ten Bewertungsstelle (i = 1, 2, 3, ..., N) an einer Auswertefläche. Anders ausgedrückt beschreibt $V(\Delta U_{s,j}(i))$ eine beispielhafte Zuordnung aus dem Schritt a). Das Argument $\Delta U_{s,j}$ ist generisch und kann eine beliebige Abbildungseigenschaft bzw. Aberration eines Brillenglassystems bezeichnen, welche die Wirkung des Brillenglassystems auf ein von einem Objekt ausgehendes Lichtbündel oder die Differenz der Wirkungen des Brillenglassystems auf ein von einem Objekt ausgehendes Lichtbündel und auf ein auf der Netzhaut des Auges konvergierendes Referenzlichtbündel beschreibt. Dabei können eine oder mehrere Abbildungseigenschaft(en) bzw. Aberration(en) in die Ziel- bzw. Gütefunktion eingehen und ausgewertet werden, wobei das Subskript $j, j \geq 1$ die j-te Abbildungseigenschaft bzw. Aberration bezeichnet.

$V_{Ist}(\Delta U_{s,j}(i))$ bezeichnet den Visus, welcher anhand der Zuordnung und dem tatsächlichen Wert der zumindest einer Abbildungseigenschaft des zu berechnenden (z.B. zu optimierenden) oder zu bewerteten Brillenglases an der $i$-ten Bewertungsstelle ermittelt wird, und $V_{Soll}(\Delta U_{s,j}(i))$ bezeichnet den entsprechenden Sollwert des Visus.

Die zumindest eine Abbildungseigenschaft bzw. Aberration kann an einer geeigneten Auswertefläche berechnet bzw. ausgewertet werden. Das Subskript "$s$" steht dementsprechend für eine beliebige Auswertefläche der zumindest einen Abbildungseigenschaft bzw. Aberration $\Delta U_{s,j}$. Die Auswertefläche kann z.B. eine Ebene (Auswerteebene) oder eine gekrümmte (z.B. sphärische) Fläche sein. Die Auswertefläche kann z.B. die Scheitelpunktkugel oder eine Fläche im Auge sein, z.B. eine der folgenden Ebenen oder Flächen:

eine Ebene oder eine (z.B. sphärische) Fläche hinter der Hornhaut,
die Vorderfläche der Augenlinse oder eine Ebene tangential zur Vorderfläche der Augenlinse,
die Rückfläche der Augenlinse oder eine Ebene tangential zur Rückfläche der Augenlinse,
die Ebene der Austrittspupille (AP); oder
die Ebene der Linsenrückfläche (L2).

Die Größe $G^V_{s,iso,i}$ bezeichnet die Gewichtung des durch die Zuordnung zur Abbildungseigenschaft $\Delta U_{s,j}$ vorgegebenen Visus an der $i$-ten Bewertungsstelle.

Dabei können entweder vorhandene Visusmodelle oder ein der nachfolgend beschriebenen Visusmodelle verwendet werden, und zwar vorzugsweise in Kombination mit einer Vorschrift, wie das Visusmodell in Verbindung mit einer Transformation der Sollvorgaben und Gewichte in die Zielfunktion einer Optimierung aufzunehmen ist.

Die zumindest eine Abbildungseigenschaft bzw. Aberration $\Delta U_{s,j}$ kann z.B. eine Abbildungseigenschaft bzw. Aberration zweiter Ordnung (wie z.B. Astigmatismus bzw. der astigmatische Fehler, sphärische Wirkung bzw. Refraktionsfehler), eine Abbildungseigenschaft bzw. Aberration höherer Ordnung (HOA) (wie z.B. Koma, Dreiblattfehler, sphärische Aberration), oder eine Kombination von unterschiedlichen Abbildungseigenschaften bzw. Aberrationen sein. So können z.B. Abbildungseigenschaften bzw. Aberrationen höherer Ordnung (HOA) durch eine vorgegebene Metrik (z.B. einer linearen Metrik) auf die Abbildungseigenschaften bzw. Aberrationen zweiter Ordnung abgebildet werden.

Die Berechnung der zumindest einen Abbildungseigenschaft bzw. Aberration kann mittels einer Wellenfrontdurchrechnung oder einer Strahldurchrechnung oder einer Wellenfelddurchrechnung erfolgen, vorzugsweise in Gebrauchsstellung des Brillenglases. Die Wellenfelddurchrechnung bedeutet eine rigorose wellenoptische Durchrechnung, im Gegensatz zu einer Wellenfrontdurchrechnung oder einer Strahldurchrechnung, die beide klassische Begriffe aus der geometrischen Optik sind.

Das Verfahren kann ferner die folgenden Schritte umfassen:
Durchrechnen mindestens eines von dem Objekt ausgehenden Lichtbündels für zumindest eine Blickrichtung mit Hilfe von Wellenfrontdurchrechnung (Wavetracing) oder Strahldurchrechnung (Raytracing) oder Wellenfelddurchrechnung durch zumindest eine Fläche des Brillenglassystems bzw. des zu berechnenden oder zu bewertenden Brillenglases bis hin zu einer Auswertefläche im Brillenglassystem. Vorzugsweise erfolgt das Durchrechnen durch zumindest eine Fläche des Brillenglassystems bzw. des zu berechnenden oder zu bewertenden Brillenglases und der optischen Elemente eines Modellauges (als Bestandteil des Brillenglassystems) bis hin zu einer Auswertefläche im Modellauge.

Ferner kann das Verfahren umfassen:

Berechnen des an der Auswertefläche vorhandenen Unterschieds des vom Objekt ausgehenden Lichtbündels im Vergleich zu einem auf der Netzhaut des Modellauges konvergierenden Referenz-Lichtbündel, und
Bestimmen der zumindest einen Abbildungseigenschaft bzw. Aberration anhand des berechneten Unterschieds.

Beispielsweise kann die zumindest eine Abbildungseigenschaft bzw. Aberration den berechneten Unterschied direkt quantifizieren oder darstellen. Die zumindest eine Abbildungseigenschaft bzw. Aberration kann auch eine Funktion des berechneten Unterschieds sein.

Vorzugsweise weist das Referenz-Lichtbündel eine sphärische Wellenfront (Referenz-Wellenfront) auf.

Vorzugsweise erfolgt das Durchrechnen mindestens eines von dem Objekt ausgehenden Lichtbündels mittels Wellenfrontdurchrechnung (Wavetracing), wobei an der Auswertefläche die Differenz (Wellenfrontdifferenz) zwischen der Wellenfront des vom Objekt ausgehenden Lichtbündels und der Wellenfront des auf der Netzhaut konvergierenden Referenz-Lichtbündels berechnet wird. Vorzugsweise wird zum Berechnen oder Optimieren des Brillenglases nicht die direkte Wellenfrontabweichung bzw. Wellenfrontdifferenz in Dioptrien, sondern der ihr entsprechender Visus-Verlust gegenüber dem maximal möglichen Visus als Kriterium zur Beurteilung der Wellenfrontabweichung benutzt.

Die Wellenfrontdifferenz kann bis zur zweiten Ordnung durch die Differenz der Vergenzmatrizen der Wellenfront des von dem Objekt ausgehenden Lichtbündels und der Wellenfront des auf der Netzhaut konvergierenden Referenz-Lichtbündels beschrieben werden. Die Differenz der beiden Vergenzmatrizen an der Auswertefläche stellt die Differenz-Vergenzmatrix dar. Werden Abbildungsfehler höherer Ordnung berücksichtigt, können diese mittels einer geeigneten Metrik (z.B. einer linearen Metrik) auf die Differenz-Vergenzmatrix abgebildet werden.

Gemäß einem zweiten Aspekt der Erfindung (der von dem ersten Aspekt unabhängig sein kann) wird der Visus nicht direkt der an der Auswertefläche berechneten Wellenfrontabweichung bzw. Wellenfrontdifferenz zugeordnet, sondern es wird zunächst zumindest eine weitere optische Größe gebildet. Dieser optischen Größe wird der Visus zugeordnet.

Die zumindest eine weitere optische Größe kann eine optische Größe im Raum geometrisch-optischer Winkel sein. Das Verfahren kann folglich ein Zuordnen eines (vektoriellen) geometrisch-optischen Winkels und/oder einer quadratischen Form im Raum geometrisch-optischer Winkel zu der berechneten Wellenfront-Differenz umfassen, wobei die zumindest eine Abbildungseigenschaft bzw. Aberration von zumindest einer Komponente des geometrisch-optischen Winkels und/oder der quadratischen Form abhängt.

Die Zuordnung eines (vektoriellen) geometrisch-optischen Winkels und/oder einer quadratischen Form im Raum geometrisch-optischer Winkel zur Wellenfrontdifferenz kann z.B. anhand des Zerstreuungsscheibchens auf der Netzhaut des Modellaugens, welches der jeweiligen Wellenfront entspricht, erfolgen.

Insbesondere gibt es für eine beliebige Wellenfront (wie z.B. eine astigmatische nicht vollkorrigierte Wellenfront) ein Zerstreuungsscheibchen auf der Netzhaut, das durch eine Ellipse (Zerstreuungsellipse) approximiert werden kann. Nach einem simplen Überlappungskriterium werden zwei Objekte noch als getrennt wahrgenommen wenn ihre Zerstreuungsscheibchen bzw. Zerstreuungsellipsen nicht überlappen. Andere Kriterien sind ebenfalls möglich. Die Parameter des Zerstreuungsscheibchens hängen von den Wellenfronteigenschaften der auf der Netzhaut einfallenden Wellenfront und somit von den Abbildungseigenschaften des Brillenglases bzw. des Brillenglassystems ab.

Vorzugsweise wird anstelle des Zerstreuungsscheibchens auf der Netzhaut ein dem Zerstreuungsscheibchen auf der Netzhaut entsprechendes Zerstreuungsscheibchen im Raum der objektseitigen geometrisch-optischen Winkels ( $\gamma$ -Raum) verwendet. Zu jedem festen Punkt $\mathbf{r}_s = (r_{sx}, r_{sy})$ auf dem Rand der wirksamen Pupille an einer beliebigen Auswertefläche bzw. Auswerteebene "*s*" im Auge kann man einen vektoriellen geometrisch-optischen Winkel $\gamma = (\gamma_x, \gamma_y)$ angeben. Der skalare geometrisch-optische Winkel $\gamma$ ist der objektseitige Winkel zwischen zwei bestimmten Hauptstrahlen HS0 und HS (also Strahlen durch die Mitte der Eintrittspupille). Der Hauptstrahl HS ist dadurch festgelegt, dass er denjenigen Randpunkt des Zerstreuungsscheibchens trifft, auf den der Punkt $\mathbf{r}_s = (r_{sx}, r_{sy})$ des Pupillenrandes abgebildet wird. Der andere Hauptstrahl HS0 spielt die Rolle einer Referenz und trifft die Mitte des Zerstreuungsscheibchens. Zur Definition des vektoriellen geometrisch-optischen Winkel gelangt man, indem man berücksichtigt, dass der $\mathbf{r}_s = (r_{sx}, r_{sy})$ zwei Komponenten besitzt und entsprechend auch der Winkel $\gamma$ in eine x-Komponente und eine y-Komponente zerlegt werden kann. Eine beispielhafte Parametrisierung der beiden Hauptstrahlen als Einheitsvektoren im xyz-Raum ist:

$$\mathbf{HS0} = (0,0,1)^T \quad \text{und} \quad \mathbf{HS} = (\sin\gamma\cos\varphi, \sin\gamma\sin\varphi, \cos\gamma)^T,$$

wobei das Licht in positive z-Richtung fortschreitet. Der vektorielle geometrisch-optische Winkel ist dann gegeben durch

$\gamma = (\gamma_x, \gamma_y) = (\sin\gamma, \cos\varphi, \sin\varphi)$. In paraxialer Näherung ist dann $\sin \approx \gamma$ und damit $\gamma = (\gamma_x, \gamma_y) = \gamma(\cos\varphi, \sin\varphi)$.

Denkt man sich einen Punkt $\mathbf{r}_s = r_s (\cos \varphi_s , \sin \varphi_s )^t$ auf dem Rand der jeweiligen Pupille kreisförmig umlaufen ($r_s = const.$), dann beschreibt $\gamma$ im $\gamma$-Raum (d.h. im Raum der Vektoren $\gamma = (\gamma_x, \gamma_y)$) eine Ellipse. Zwei Objekte können dann noch getrennt wahrgenommen werden (bezüglich eines simplen Überlappkriteriums), wenn sich ihre Zerstreuungsellipsen im $\gamma$-Raum nicht überlappen. Andere Kriterien können ebenfalls vorgegeben werden.

Zur Beschreibung des Zerstreuungsscheibchens auf der Netzhaut oder im $\gamma$-Raum kann eine quadratische Form (z.B. in Form einer Matrix) verwendet werden. Die zumindest eine Abbildungseigenschaft des Brillenglassystems oder des zu optimierenden Brillenglases kann anhand zumindest einer der Komponenten der quadratischen Form oder einer Kombination von Komponenten der quadratischen Form ermittelt werden.

Ein Vorteil der Berücksichtigung von Abbildungseigenschaften eines Brillenglassystems oder eines zu optimierenden Brillenglases im Raum der objektseitigen geometrisch-optischen Winkeln ist eine bessere und einfachere Vergleichbarkeit mit dem Visus eines Brillenträgers. Ein weiterer Vorteil ist, die automatische Berücksichtigung der Pupillendurchmesser. Ferner fasst der geometrisch-optische Winkel die gemeinsame Auswirkung einer Fehlkorrektion und eines gegebenen Pupillendurchmessers in genau der Weise zusammen, die für den Visus ausschlaggebend ist.

Die Zuordnung der zumindest einen Abbildungseigenschaft bzw. Aberration eines Brillenglassystems zum Visus des Brillenträgers bzw. die Funktion $V(\Delta U_{s,j}(i))$ kann parametrisch vom gemessenen Ausgangsvisus und/oder der gemessenen Sensitivität des Brillenträgers abhängen.

Der Ausgangsvisus entspricht dem Visus des Brillenträgers beim Blicken durch ein Brillenglassystem mit einer Wirkung, die durch den Refraktionswert des jeweiligen Auges des Brillenträgers bestimmt ist, d.h. bei optimaler Korrektion der Fehler des Auges des Brillenträgers. Anders ausgedrückt ist unter Ausgangsvisus derjenige Wert des Visus zu verstehen, der bei bestmöglicher Korrektion (Vollkorrektion) erreichbar ist, in der Fachsprache auch "Visus cum correctione" oder Vcc genannt. Die Sensitivität des Brillenträgers kann gemessen werden, indem man ihn durch ein Glas mit einer vorgegebenen Fehlkorrektion blicken lässt und dann seinen Visus ermittelt. Die Fehlkorrektion kann z.B. von +0,5 Dpt bis +3,0 Dpt sein, auch andere Werte sind möglich.

Eine beispielhafte Zuordnung der zumindest einen Abbildungseigenschaft bzw. Aberration eines Brillenglassystems zum Visus des Brillenträgers basiert auf folgender Grundfunktion:

$$V(\Delta U) = \left(\gamma_0^k + (m\,\Delta U^p)^k\right)^{1/k},$$

wobei:

$\Delta U$ eine Abbildungseigenschaft bzw. Aberration des Brillenglassystems bezeichnet;
der Parameter $\gamma_0$ von dem Wert des Ausgangsvisus abhängt; und
die Parameter $k$, $m$ und $p$ Parameter (nicht notwendig ganzzahlige) zur Beschreibung des Visusabfalls als Funktion von $\Delta U$ sind.

In bevorzugten Einheiten sind $V(\Delta U)$ und $\Delta U$ dimensionslos, d.h. in Radian gemessen.

Unter dieser Voraussetzung sind typische Parameterwerte $0,5 \leq k \leq 4,0$, $0,5 \leq m \leq 4,0$, $1,0 \leq p \leq 2,0$.

Vorzugsweise entspricht, wie oben beschrieben, die Abbildungseigenschaft bzw. Aberration $\Delta U$ zumindest einer der Komponenten oder einer Kombination von Komponenten einer quadratischen Form im Raum geometrisch-optischer Winkel, wobei die quadratische Form der an der Auswertefläche berechneten Wellenfront-Differenz zugeordnet wird.

Der Ausgabewert $V$ der obigen Funktion hat vorzugsweise die Bedeutung des geometrisch-optischen Winkels (in Radian), der dem aktuellen Visus entspricht. Vorzugsweise ist der Parameter $\gamma_0$ direkt durch den Wert des geometrisch-optischen Winkels $\gamma_0$ (in Radian) gegeben, der dem Ausgangsvisus entspricht.

Die Zuordnung der zumindest einen Abbildungseigenschaft des Brillenglassystems zum Visus kann anhand von einem oder mehreren bereitgestellten Werte-Paaren erfolgen, wobei jedes Werte-Paar aus i) einem Visus-Wert eines der Augen des Brillenträgers (das Auge, für das das Brillenglas berechnet und optimiert wird) beim Sehen durch das Brillenglassystem und ii) der sphärischen und/oder astigmatischen Brechkraft des Brillenglassystems bestimmt werden.

Das Verfahren kann dementsprechend ein Erfassen zumindest eines Werte-Paars bestehend aus dem i) Wert des Visus des Auges des Brillenträgers beim Sehen durch ein Brillenglassystem (z.B. durch ein Brillenglas einer Refraktionsbrille) mit einer bestimmten sphärischen und/oder astigmatischen Brechkraft und ii) der sphärischen und/oder astigmatischen Brechkraft des Brillenglassystems umfassen. Die Brechkraft des Brillenglassystems bezieht sich vorzugsweise sowohl auf die sphärische als auch auf die astigmatische Brechkraft. Optional können Eigenschaften bzw. Abbildungsfehler höherer Ordnung (HOA) berücksichtigt werden, welche z.B. mittels einer Metrik auf die sphärische und/oder astigmatische Brechkraft abgebildet werden können.

Das Bestimmen des Visus-Werts bei einer bestimmten sphärischen und/oder astigmatischen Brechkraft des Brillenglassystems ist aus dem Stand der Technik bekannt und kann z.B. anhand von verschiedenen Tests, wie z.B. dem Landolt-Test, mono- oder binokular erfolgen. In einem Beispiel wird zumindest der Visus des Auges des Brillenträgers bei einer sphärischen und/oder astigmatischen Brechkraft des Brillenglassystems, die eine optimale Korrektion des Sehens des Brillenträgers bewirkt, erfasst.

Bei einem der Werte-Paare kann die Brechkraft durch den Refraktionswert eines der Augen des Brillenträgers gegeben sein. Bei einem der Werte-Paare kann die Brechkraft durch den Refraktionswert eines der Augen des Brillenträgers zuzüglich einer sphärischen und/oder astigmatischen Nebelung, d.h. zuzüglich einer von dem Refraktionswert des Auges eingeführten zusätzlichen dioptrischen Wirkung, gegeben sein. Die zusätzliche dioptrische Wirkung kann eine sphärische Wirkung, eine zylindrische Wirkung oder eine Kombination aus beiden sein.

Der der Nebelung entsprechende dioptrische Abstand vom Refraktionswert des Auges kann einen Wert zwischen 0,5 Dpt und 3,0 Dpt aufweisen. Andere Werte sind ebenfalls möglich.

Vorzugsweise werden mehreren Werte-Paare bei unterschiedlichen sphärischen und/oder astigmatischen Nebelungen erfasst und daraus eine Zuordnung des Visus zu der zumindest einen Abbildungseigenschaft ermittelt.

Wie oben beschrieben kann das Brillenglassystem sowie die Gebrauchsstellung des zu berechnenden (z.B. optimierenden) oder zu bewertenden Brillenglases, aufgrund dessen die zumindest eine Abbildungseigenschaft bzw. Aberration ermittelt wird, ein Modellauge bzw. Augenmodell umfassen, wobei das Modellauge mit zumindest einem der folgenden Parameter beschrieben wird: Augenlänge, Abstände und Krümmungen der brechenden Flächen, Brechzahlen der brechenden Medien, Pupillendurchmesser, Position der Pupille. Das Modellauge kann z.B. ein etabliertes Modellauge sein, in welchem einem rechtsichtigen Grundauge eine Fehlsichtigkeit (Refraktionsdefizit) überlagert wird. Eine Beschreibung eines Modellauges sowie eines Brillenglassystems bestehend aus einem Brillenglas und einem Modellauge ist z.B. in dem Buch von Dr. Roland Enders "Die Optik des Auges und der Sehhilfen", Optische Fachveröffentlichung GmbH, Heidelberg, 1995, Seiten 25 ff. und in dem Buch von Diepes, Blendwoske "Optik und Technik der Brille", Optische Fachveröffentlichung GmbH, Heidelberg, Seite 47 ff. enthalten. Auf diese Publikationen wird ebenfalls hinsichtlich der verwendeten Fachterminologie verwiesen, deren entsprechende Ausführungen insoweit einen integralen Offenbarungsbestandteil der vorliegenden Anmeldung darstellen.

Die Parameter des Modellauges können durchschnittliche Parameter sein. Zumindest einer der Parameter des Modellauges kann jedoch beim Brillenträger individuell gemessen und/oder aus individuellen Messwerten bestimmt werden. Die Bestimmung eines individuellen Modellauges bzw. eines individuellen Augenmodells anhand von individuellen Messwerten ist z.B. in DE 10 2017 000 772.1 beschrieben, deren entsprechende Ausführungen insoweit einen integralen Offenbarungsbestandteil der vorliegenden Anmeldung darstellen.

Das Berechnen oder Optimieren des zu optimierenden Brillenglases erfolgt durch Minimieren oder Maximieren der oben beschriebenen Zielfunktion, in der der Visus direkt eingeht. Die Zielfunktion wird mindestens einmal, vorzugsweise mehrmals ausgewertet. Vorzugsweise wird zumindest eine der Flächen des Brillenglases variiert und bei jedem Variationsschritt die zumindest eine Abbildungseigenschaft bzw. Aberration des in einer vorgegebenen Gebrauchsstellung angeordneten Brillenglases berechnet. Anhand der berechneten Abbildungseigenschaft bzw. Aberration und der vorgegebenen Zuordnung kann der entsprechende Visus-Wert (Ist-Visuswert) ermittelt und mit dem vorgegebenen Soll-Visuswert verglichen werden. Die obigen Schritte werden iterativ so lange wiederholt, bis ein vorgegebenes Optimierungskriterium erreicht wird.

Weitere Aspekte der Erfindung betreffen eine Vorrichtung zum Berechnen (z.B. zum Optimieren), eine Vorrichtung zum Bewerten eines Brillenglases für ein Auge eines Brillenträgers und eine Vorrichtung zum Herstellen eines Brillenglases umfassend jeweils Rechenmittel (wie z.B. Berechnungs- oder Optimierungsmittel), welche ausgelegt sind, das Brillenglas nach einem Verfahren zum Berechnen (z.B. Optimieren) oder Bewerten eines Brillenglases gemäß einem der oben beschriebenen Aspekte und/oder Beispiele zu berechnen (z.B. zu optimieren) oder zu bewerten. Die Vorrichtung zum Herstellen eines Brillenglases umfasst ferner Bearbeitungsmittel, welche ausgelegt sind, das Brillenglas gemäß dem Ergebnis der Berechnung bzw. Optimierung zu bearbeiten. Die Bearbeitungsmittel können z.B. CNC gesteuerte Maschinen zur Direktbearbeitung eines Blanks nach den ermittelten Optimierungsvorgaben umfassen. Alternativ kann das Brillenglas mittels eines Gießverfahrens gefertigt werden. Vorzugsweise weist das fertig bearbeitete Brillenglas eine einfache sphärische oder rotationssymmetrisch asphärische Fläche und eine nach dem erfindungsgemäßen Verfahren sowie nach individuellen Parametern des Brillenträgers berechnete oder optimierte Fläche auf. Vorzugsweise ist die einfache sphärische oder rotationssymmetrisch asphärische Fläche die Vorderfläche (d.h. die objektseitige Fläche) des Brillenglases. Selbstverständlich ist es jedoch möglich, die optimierte Fläche als Vorderfläche des Brillenglases anzuordnen. Auch können beide Flächen des Brillenglases optimiert werden. Das Brillenglas kann ein Einstärkenbrillenglas oder ein progressives Brillenglas sein.

Die Vorrichtung zum Berechnen (z.B. zum Optimieren) eines Brillenglases, zum Bewerten eines Brillenglases oder zum Herstellen eines Brillenglases kann zumindest eine der folgenden Komponenten umfassen:

- ein Visuszuordnungsmodul zum Bereitstellen einer Zuordnung zumindest einer Abbildungseigenschaft bzw. Aberration eines Brillenglassystems zum Visus des Brillenträgers oder eines durchschnittlichen Brillenträgers beim Betrachten eines Objekts durch das Brillenglassystem;

- ein Zielfunktionsvorgabe und/oder -ermittlungsmodul zum Bestimmen oder Vorgeben einer Zielfunktion für das zu optimierende Brillenglas, in welcher die Zuordnung aus Schritt (a) des Verfahrens auszuwerten ist; und

ein Berechnungsmodul zum Berechnen oder Optimieren des zu optimierenden Brillenglases durch Minimieren oder Maximieren der Zielfunktion, wobei die Zielfunktion mindestens einmal ausgewertet wird;
ein Bewertungsmodul zum Bewerten des zu bewertenden Brillenglases durch Auswerten der Zielfunktion, wobei die Zielfunktion mindestens einmal ausgewertet wird.

Ferner kann die Vorrichtung zum Berechnen (z.B. zum Optimieren) eines Brillenglases, zum Bewerten eines Brillenglases und/oder zum Herstellen eines Brillenglases zumindest eine der folgenden Komponenten umfassen:

ein Visuserfassungsmodul zum Erfassen von zumindest einem Werte-Paar bestehend aus einem Visus-Wert eines der Augen des Brillenträgers beim Sehen durch das Brillenglassystem und einer Wirkung des Brillenglassystems;
ein Visusmodellbestimmungsmodul zum Bestimmen der Zuordnung zumindest einer Abbildungseigenschaft bzw. Aberration eines Brillenglassystems zum Visus anhand des zumindest einen Werte-Paars;
ein Augenparameter-Erfassungsmodul zum Erfassen des Refraktionsdefizits bzw.

Refraktionswerts und optional zumindest eines weiteren Parameters zumindest eines Auge des Brillenträgers;

ein Augenmodellbestimmungsmodul zum Bestimmen eines Modellauges anhand zumindest einem Parameter des Auges des Brillenträgers;
ein Gebrauchsstellungsparameter-Erfassungsmodul zum Bestimmen zumindest eines individuellen Parameters der Gebrauchsstellung des zu optimierenden Brillenglases;
eine Flächenmodelldatenbank zum Vorgeben einer ersten Fläche und einer zweiten Fläche für das zu berechnende bzw. optimierende Brillenglas (Startflächen);
ein Modul zum Durchrechnen mindestens eines von dem Objekt ausgehenden Lichtbündels für zumindest eine Blickrichtung mit Hilfe von Wellenfrontdurchrechnung oder Strahldurchrechnung oder Wellenfelddurchrechnung durch zumindest eine Fläche des Brillenglassystems bzw. des zu optimierenden oder zu bewertenden Brillenglases und gegebenenfalls durch der optischen Elemente des Modellauges bis hin zu einer Auswertefläche im Brillenglassystem, wie z.B. einer Auswertefläche im Auge;
ein Auswertemodul zum Auswerten des an der Auswertefläche vorhandenen Unterschieds des vom Objekt ausgehenden Lichtbündels im Vergleich zu einem auf der Netzhaut des Auges konvergierenden Referenz-Lichtbündel; und/oder
ein Auswertemodul zum Auswerten bzw. Bestimmen zumindest einer Abbildungseigenschaft bzw. Aberration anhand des berechneten Unterschieds.

Die Rechenmittel (z.B. Berechnungs- oder Optimierungsmittel) und die entsprechenden Berechnungs- oder Ermittlungs- oder Auswertemodule können geeignet konfigurierte bzw. programmierte Computer, spezialisierter Hardware und/oder Computernetze bzw. Computersysteme etc. umfassen, welche mittels geeigneter Schnittstellen in Signalverbindung mit zumindest einem Speicher stehen und insbesondere die in dem Speicher gespeicherten Daten auslesen und/oder modifizieren. Die Erfassungsmittel können z.B. mittels graphischer Benutzerschnittstellen, elektronischer Schnittstellen, etc. realisiert werden. Die Berechnungs-oder Optimierungsmittel können ferner zumindest eine vorzugsweise interaktive grafische Benutzerschnittstelle (GUI) umfassen, welche es einem Benutzer ermöglicht, Daten einzugeben und/oder zu modifizieren.

Ferner bietet die Erfindung ein Computerprogrammerzeugnis, insbesondere in Form eines Speichermediums oder eines Datenstroms, welches Programmcode enthält, der ausgelegt ist, wenn geladen und ausgeführt auf einem Computer, ein Verfahren zum Berechnen (z.B. zum Optimieren) oder Bewerten eines Brillenglases gemäß einem der oben beschriebenen Aspekte und/oder Beispiele durchzuführen.

Außerdem bietet die Erfindung ein Verfahren zum Herstellen eines Brillenglases umfassend:

Berechnen oder Optimieren eines Brillenglases nach dem Verfahren zum Berechnen (z.B. Optimieren) eines Brillenglases gemäß einem der oben beschriebenen Aspekte und/oder Beispiele; und
Fertigen des so berechneten (z.B. optimierten) Brillenglases.

Des Weiteren bietet die Erfindung eine Verwendung eine nach dem Herstellungsverfahren gemäß der Erfindung hergestellten Brillenglases in einer vorgegebenen durchschnittlichen oder idealen Gebrauchsstellung des Brillenglases vor den Augen eines bestimmten Brillenträgers zur Korrektion einer Fehlsichtigkeit des Brillenträgers.

Mit den vorgeschlagenen Verfahren und Vorrichtungen gemäß einem der obigen Aspekte und Beispiele kann die Bewertung der Abbildungseigenschaften bzw. Aberrationen eines Brillenglases verbessert und der tatsächlichen Wahrnehmung eines Brillenträgers beim Blick durch das Brillenglas angepasst werden. Ferner können die Vorteile einer Durchrechnung in das Auge mit der Erfahrung zum Auffinden von Sollvorgaben und Gewichten, zu der nur an der Scheitelpunktkugel ein Stand der Technik existiert, verbunden werden. Dabei werden konventionelle Sollvorgaben und Gewichte an der Scheitelpunktkugel nicht lediglich im Inneren des Auges von Beginn an wiederholt. Stattdessen werden vorzugsweise die bereits vorhandenen Sollvorgaben und Gewichte an der Scheitelpunktkugel durch eine geeignete Vorschrift auf jede gewünschte Auswertefläche bzw. Auswerteebene im Inneren des Auges transformiert. Darüber hinaus wird vorzugsweise eine konstruktive Vorschrift angegeben, nach der ein bestehendes Design für ein Brillenglas (also das Ergebnis einer Optimierung eines Brillenglases) an der Scheitelpunktkugel durch geeignete Transformation der Sollvorgaben und Gewichte bei einer Optimierung an einer gewünschten Auswerteebene bzw. Auswertefläche im Inneren des Auges reproduziert werden kann. Dies kann durch ein Normierungsverfahren erfolgen, mittels dessen die z.B. in der Offenlegungsschrift WO 2013/104548 A1 beschriebene Methode nicht von sich aus zu neuen Designs führt, sondern erst in Kombination mit Abweichungen der Parameter (Modellparameter und Abbildungsfehler des Auges) von vorher festzulegenden Standardwerten. Variationen der Parameter können somit direkt in Variationen des Designs übersetzt werden.

Bevorzugte Ausführungsformen der Erfindung werden nachfolgend zumindest teilweise unter Bezugnahme auf die Zeichnungen beispielhaft erläutert. Dabei zeigt:

**Figur 1** ein schematisches System Brille-Auge;
**Figur 2** ein beispielhaftes Visusmodell;
**Figur 3** die Freiheitsgrade der Parametrisierung eines beispielhaften Visusmodells;
**Figur 4** die Ergebnisse einer Standard-Optimierung eines Brillenglases an der Scheitelpunktkugel;
**Figur 5** die Ergebnisse einer beispielhaften erfindungsgemäßen Optimierung eines Brillenglases unter Berücksichtigung des Visus.

Generell sollen in dieser Beschreibung fett gesetzte Kleinbuchstaben Vektoren und fett gesetzte Großbuchstaben Matrizen bezeichnen (wie z.B. die (2 x 2)-Vergenzmatrize **S**). Kursiv gesetzte Kleinbuchstaben (wie z.B. d) bezeichnen skalare Größen.

Weiterhin sollen fette, kursiv gesetzte Großbuchstaben Wellenfronten oder Flächen als Ganzes bezeichnen. Zum Beispiel bezeichnet $S$ die Vergenzmatrix der gleichnamigen Wellenfront $S$, nur dass $S$ außer den Aberrationen 2-ter Ordnung, die in **S** zusammengefasst sind, auch die Gesamtheit aller Aberrationen höherer Ordnung (HOA) der Wellenfront mit umfasst. Mathematisch gesehen steht $S$ für die Menge aller Parameter, die notwendig sind, um eine Wellenfront (ausreichend genau) in Bezug auf ein gegebenes Koordinatensystem zu beschreiben. Vorzugsweise steht $S$ für einen Satz von Zernike-Koeffizienten mit einem Pupillenradius oder einem Satz aus Koeffizienten einer Taylorreihe. Besonders bevorzugt steht $S$ für die Menge aus einer Vergenzmatrix **S** zur Beschreibung der Wellenfronteigenschaften zweiter Ordnung und einem Satz von Zernike-Koeffizienten (mit einem Pupillenradius), der zur Beschreibung aller restlichen Wellenfronteigenschaften außer der zweiten Ordnung dient oder einem Satz von Koeffizienten gemäß einer Zerlegung nach Taylor. Für Flächen statt Wellenfronten gelten analoge Aussagen.

Vorzugsweise wird nicht die direkte Wellenfrontabweichung in Dioptrien, sondern der ihr entsprechende Visus-Verlust gegenüber dem maximal möglichen Visus als Kriterium zur Beurteilung der Wellenfrontabweichung benutzt/verwendet. Dabei können entweder vorhandene Visusmodelle oder ein der nachfolgend beschriebenen Visusmodelle verwendet werden, und zwar vorzugsweise in Kombination mit einer Vorschrift, wie das Visusmodell in Verbindung mit der Transformation der Sollvorgaben und Gewichte in die Zielfunktion einer Optimierung aufzunehmen ist.

Ein erstes beispielhaftes Verfahren zum Berechnen oder Optimieren eines Brillenglases kann die folgenden Schritte umfassen:

Schritt S1: Durchrechnung mindestens eines von einem Objekt ausgehenden Lichtbündels mit Hilfe von Wellenfrontdurchrechnung (Wavetracing) oder Strahldurchrechnung (Raytracing) durch die optischen Elemente des Auges bis hin zu einer Auswerteebene bzw. Auswertefläche im Auge, beispielsweise bis hinter die Hornhaut, bis zur Vorderfläche der Augenlinse, bis zur Rückfläche der Augenlinse, bis hin zur Austrittspupille AP, oder zur Linsenrückfläche L2;

Schritt S2: Berechnen der Unterschiede des Lichtbündels zu einem auf der Netzhaut konvergierenden Referenz-Lichtbündel an der Auswerteebene bzw. Auswertefläche;

Schritt S3: Bewertung der Unterschiede des Lichtbündels im Vergleich zu einem Referenz-Lichtbündel, beispielsweise durch die Größe des Zerstreuungsscheibchens auf der Netzhaut;

Schritt S4: Zuordnung eines Visus-Werts zu dem bewerteten Unterschied der Lichtbündel aus dem Schritt S3;

Schritt S5: Aufbau einer Zielfunktion, die von dem zugeordneten Visus-Wert abhängt.

Die einzelnen Schritte können jeweils in einer spezielleren Form durchgeführt werden:

Schritt S1: Durchrechnung von Wellenfronten durch die optischen Elemente des Auges bis hin zur Austrittspupille AP bzw. zur Linsenrückfläche L2;

Schritt S2: Berechnen der Unterschiede durch Vergleich dieser Wellenfronten mit sphärischen Referenz-Wellenfronten und Bildung der Differenzwellenfront;

Schritt S3: Bewertung der Unterschiede des ersten Lichtbündels im Vergleich zu einem Referenz-Lichtbündel, durch Zuordnung von geometrisch-optischen Winkeln (bzw. einer quadratischen Form zur Beschreibung der Ellipse im objektseitigen Raum geometrisch-optischer Winkel) zu der Differenzwellenfront an AP/L2;

Schritt S4: Zuordnung eines Visus-Werts zu der quadratischen Form, wobei die Zuordnungsvorschrift parametrisch vom gemessenen Ausgangsvisus (und der gemessenen Sensitivität) des Patienten abhängt;

Schritt S5: Aufbau einer Zielfunktion, die von dem zugeordneten Visus-Wert abhängt.

Ein weiteres beispielhaftes Verfahren, das insbesondere das Visus-Modell betrifft, verwendet den obigen Schritt 4 als Ausgangspunkt. Das Verfahren kann die folgenden Schritte umfassen:

Schritt S 1': Bereitstellen einer Zuordnung der Wirkung eines optischen Systems auf ein von einem Objekt ausgehendes Lichtbündel zum Visus einer Person beim Betrachten des Objekts durch das optische System;

Schritt S2': Aufbau einer Zielfunktion für ein zu optimierendes Brillenglas, in welcher die Zuordnung aus Schritt (a) auszuwerten ist;

Schritt S3': Berechnen des Brillenglases durch Minimieren der Zielfunktion, wobei die Zielfunktion mindestens einmal ausgewertet wird.

In bevorzugten Ausführungsformen können die Schritte verfeinert werden:

Zum Schritt S1':
Die bereitgestellte Zuordnung der Wirkung des optischen Systems zum Visus kann anhand von einem oder mehreren bereitgestellten Werte-Paaren aus

- Visus-Wert des Auges der Person beim Sehen durch ein optisches System (z.B. eines Brillenglases einer Refraktionsbrille)
- sphärischer und/oder astigmatischer Brechkraft des optischen Systems bestimmt werden.

Ferner kann:

- bei einem der Werte-Paare die Brechkraft durch den Refraktionswert des Auges gegeben sein, und/oder
- bei einem der Werte-Paare die Brechkraft durch den Refraktionswert des Auges zuzüglich einer sphärischen und/oder astigmatischen Nebelung gegeben sein,

wobei ein der Nebelung entsprechender dioptrischer Abstand vorzugsweise einen Wert zwischen 0,5 Dpt und 3,0 Dpt besitzt.

Die Zuordnung der Wirkung des optischen Systems zum Visus kann anhand eines Augenmodells durchgeführt werden. Das Augenmodell kann mit zumindest einem der folgenden Parameter beschrieben werden: Augenlänge, Abstände und Krümmungen der brechenden Flächen, Brechzahlen der brechenden Medien, Pupillendurchmesser, Position der Pupille, wobei mindestens einer der Parameter des Augenmodells vorzugsweise bei der Person individuell gemessen wurde und/oder aus individuellen Messwerten bestimmt wurde, wie z.B. in DE 10 2017 000 772.1 beschrieben.

Zum Schritt S3':

Zum Auswerten der Zielfunktion kann ein von einem Objektpunkt ausgehendes Lichtbündel für zumindest eine Blickrichtung mit Hilfe von Wellenfrontdurchrechnung oder Strahldurchrechnung durch die optischen Elemente des Auges bis hin zu einer Auswerte-Ebene im Auge, beispielsweise bis hinter die Hornhaut, bis zur Vorderfläche der Augenlinse, bis zur Rückfläche der Augenlinse, bis hin zur Austrittspupille AP, oder zur Linsenrückfläche L2, bestimmt werden.

Zum Auswerten der Zielfunktion können die an der Auswerteebene bzw. Auswertefläche vorhandenen Unterschiede des Lichtbündels im Vergleich zu einem auf der Netzhaut konvergierenden Referenz-Lichtbündel berechnet werden, wobei die berechneten Unterschiede bei der Auswertung der Zielfunktion bewertet werden, beispielsweise durch die Größe des Zerstreuungsscheibchens auf der Netzhaut.

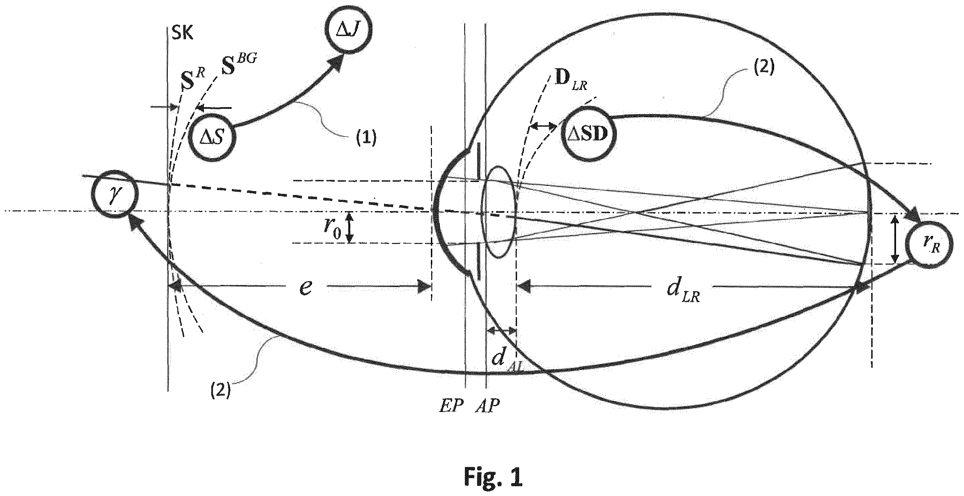

**Figur 1** zeigt eine schematische Darstellung eines Brillenglassystems umfassend ein Modellauge und illustriert die Bestimmung des geometrisch-optischen Winkels, wobei mit "(1)" die Bildung des residualen Astigmatismus nach dem Stand der Technik (siehe z.B. EP 2 499 534) und mit "(2)" die Bildung der Differenz-Wellenfront und des geometrisch-optischen Winkels gezeigt wird.

Insbesondere wird hierzu angenommen, dass ein Lichtbündel mit einer sphärischen Wellenfront von einem Objektpunkt ausgeht und bis zur ersten Brillenglasfläche propagiert. Dort wird das Lichtbündel gebrochen und propagiert anschließend bis zur zweiten Brillenglasfläche, wo es wieder gebrochen wird. Das vom Brillenglas austretende Lichtbündel propagiert anschließend in Richtung des Auges bis es auf die Hornhaut trifft, wo es wiederum gebrochen wird. Nach einer weiteren Propagation innerhalb der Augenvorderkammer bis zur Augenlinse, wird das Lichtbündel auch von der Augenlinse gebrochen und propagiert bis zur Netzhaut.

Die Wirkung des optischen Systems bestehend aus dem Brillenglas und dem Modellauge auf das vom Objekt ausgehenden Lichtbündel kann mittels Strahldurchrechnung oder mittels Wellenfrontdurchrechnung ermittelt werden. Vorzugsweise erfolgt eine Wellenfrontdurchrechnung, wobei pro Durchblickpunkt des Brillenglases vorzugsweise nur ein Strahl (der Hauptstrahl, der vorzugsweise durch den Augendrehpunkt läuft) sowie die Ableitungen der Pfeilhöhen der Wellenfront nach den transversalen (zum Hauptstrahl senkrechten) Koordinaten berechnet werden. Diese Ableitungen werden bis zur gewünschten Ordnung berücksichtigt, wobei die zweiten Ableitungen die lokalen Krümmungseigenschaften der Wellenfront beschreiben und mit den Abbildungseigenschaften bzw. Aberrationen zweiter Ordnung zusammenhängen. Die höheren Ableitungen der Wellenfront hängen mit den Abbildungseigenschaften bzw. Aberrationen höherer Ordnungen zusammen.

Bei der Durchrechnung von Licht durch das Brillenglas bis in das Auge werden die lokalen Ableitungen der Wellenfronten an einer geeigneten Position im Strahlverlauf ermittelt, um sie dort mit einer Referenzwellenfront zu vergleichen, welche in einem Punkt auf der Retina des Auges konvergiert. Insbesondere werden die beiden Wellenfronten (d.h. die vom Brillenglas kommende Wellenfront und die Referenzwellenfront) an einer Auswerteebene (z.B. an einer Auswertefläche) miteinander verglichen. Als Referenzwellenfront kann eine sphärische Wellenfront dienen, deren Krümmungsmittelpunkt auf der Netzhaut des Auges liegt.

An der Scheitelpunktkugel SPK (auch als SK bezeichnet) weisen die Vergenzmatrizen $\mathbf{S}^R$ und $\mathbf{S}^{BG}$ des Rezepts ($\mathbf{S}^R$) und der Wellenfront aus dem Brillenglas ($\mathbf{S}^{BG}$) die folgende Form auf:

$$\mathbf{S}^R = \begin{pmatrix} M^R + J_0^R & J_{45}^R \\ J_{45}^R & M^R - J_0^R \end{pmatrix}; \quad \mathbf{S}^{BG} = \begin{pmatrix} M^{BG} + J_0^{BG} & J_{45}^{BG} \\ J_{45}^{BG} & M^R - J_0^{BG} \end{pmatrix}$$

$$(1)$$

mit den astigmatischen Komponenten ihrer Power-Vektoren

$$\mathbf{J}^R = \begin{pmatrix} J_0^R \\ J_{45}^R \end{pmatrix}; \quad \mathbf{J}^{BG} = \begin{pmatrix} J_0^{BG} \\ J_{45}^{BG} \end{pmatrix} \tag{2}$$

Dabei können die obigen Vergenzmatrizen bzw. die Power-Vektoren, die Abbildungseigenschaften bzw. Aberrationen zweiter Ordnung enthalten, wie folgt zustande kommen: Entweder durch eine direkte Wellenfrontdurchrechnung in zweiter Ordnung oder durch eine Wellenfrontdurchrechnung inklusive Aberrationen höherer Ordnung (HOA), die dann mittels einer Metrik in den Fehlern bzw. Aberrationen zweiter Ordnung berücksichtigt werden.

**Durchrechnung der Wellenfronten**

Wellenfrontdurchrechnung in zweiter Ordnung:

Nachfolgend wird der Einfachheit halber als Auswertebene die Ebene L2 (Linsenrückfläche) angenommen. Anstelle von L2 kann jedoch eine beliebige andere Auswerteebene bzw. Auswertefläche "s" im Auge verwendet werden.
Tritt eine Wellenfront ins Auge ein, wird sie mehrfach propagiert und gebrochen, was durch die Transfermatrix

$$T = \begin{pmatrix} A & B \\ C & D \end{pmatrix} \tag{4}$$

beschrieben wird. Um die Wellenfront im Auge zu berechnen, muss die Vergenzmatrix $S^{BG}$ entsprechend der Anwendung von **T** unterzogen werden, so dass:

$$S^{BG} \xrightarrow{\quad T \quad} S^{BG} \tag{5}$$

Als Referenz-Vergenz dient jedoch keine von der Vergenzmatrix des Rezepts $S^R$ abgeleitete Größe, sondern eine sphärische Referenz-Vergenz mit der Referenz-Vergenzmatrix $D_{LR}$.
Statt wie im Stand der Technik $S^{BG}$ mit $S^R$, d.h. mit der Referenz-Wellenfront an der Scheitelpunktkugel SPK bzw. SK zu vergleichen, kann das Brillenglas auf der Basis von der sphärischen Referenz-Vergenzmatrix $D_{LR}$ und der transformierten Vergenzmatrix $S^{BG}$ optimiert werden, indem die transformierte Vergenzmatrix $S^{BG}$ mit der Referenz-Vergenzmatrix $D_{LR}$ verglichen wird.
Die Durchrechnung in zweiter Ordnung aus Gleichung (5) entspricht inhaltlich der Durchrechnung in der WO 2013/104548 A1, die in der dortigen Gleichung (2) zu der Vergenzmatrix S' führt.

Wellenfrontdurchrechnung inklusive der Abbildungsfehler höherer Ordnung (d.h. Ordnung höher als 2) bzw. HOA:

Eine Wellenfrontdurchrechnung inklusive HOA ist in der WO 2013/104548 A1 beschrieben. Das Ergebnis der Durchrechnung kann dann statt durch **S'** durch eine entsprechende Wellenfront-Darstellung, die auch Abbildungsfehler höherer Ordnung berücksichtigt, beschrieben werden. Bevorzugt werden hierfür Zernike-Koeffizienten verwendet, und besonders bevorzugt die Taylor-Darstellung, so dass in letzterer direkt die lokalen Ableitungen der Wellenfront $W'_{xx}$, $W'_{xy}$, $W'_{yy}$, $W'_{xxx}$, $W'_{xxy}$, $W'_{xyy}$, $W'_{yyy}$, $W'_{xxxx}$ etc. verwendet werden können. Die Auswertefläche im Auge wird allgemein durch "s" bezeichnet, wobei bevorzug die Auswertefläche die Austrittspupille oder die Linsenrückfläche ist (d.h. "s" = "AP" oder "s" = "L2"). Mittels einer Metrik kann dieser Wellenfront eine effektive Wellenfront **S'** zweiter Ordnung zugeordnet werden. Die Metrik kann beispielsweise eine lineare Metrik sein.

**Bildung der Differenzwellenfront**

Durchrechnung in zweiter Ordnung:

Ausgangspunkt für das weitere Vorgehen ist in diesem Fall die Differenz bzw. Differenzwellenfront, welche in zweiter Ordnung durch die Differenz-Vergenzmatrix $\Delta SD_s$ beschrieben werden kann:

$$\Delta SD_s = S'^{BG}_s - D_{LR}. \tag{6a}$$

Durchrechnung inklusive HOA:

Im allgemeinen Fall wird die Differenz aus den Wellenfronten $S'_s$ und der Referenzwellenfront $R'_s$ gebildet. Vorzugsweise wird diese Differenz mittels einer Metrik in den Raum der Vergenzmatrizen abgebildet:

$$\Delta SD_s = Metrik(S'^{BG}_s - R'_s) \tag{6b}$$

Falls bevorzugt die Metrik linear ist, ist das Ergebnis aus Gleichung (6b) dasselbe wie aus Gleichung (6a), wenn man dort setzt:

$$\mathbf{S}'^{BG} = Metrik(\mathbf{S}'_s)$$
$$\mathbf{D}_{LR} = Metrik(\mathbf{R}'_s)$$

$$(6c)$$

Eine mögliche Metrik bezieht sich auf die Darstellung von $\mathbf{S}'^{BG}_s - \mathbf{R}'_s$ in Form von Zernike-Koeffizienten. Beispielhaft kann die sogenannte RMS-Metrik verwendet werden, die den Pupillenradius $r_0$ und sonst nur die Zernike-Koeffizienten zweiter Ordnung verwendet, d.h. $c_2^0, c_2^2, c_2^{-2}$ . Die Powervektor-Komponenten sind dann:

$$M = -\frac{4\sqrt{3}}{r_0^2} c_2^0, \quad J_0 = -\frac{2\sqrt{6}}{r_0^2} c_2^2 \quad J_{45} = -\frac{2\sqrt{6}}{r_0^2} c_2^{-2}$$

$$(6d)$$

und die Differenzmatrix ist dann gegeben durch:

$$\Delta\mathbf{SD}_s = \begin{pmatrix} M+J_0 & J_{45} \\ J_{45} & M-J_0 \end{pmatrix}$$

$$(6e)$$

Weitere beispielhafte Metriken sind in der EP 2 115 527 B1 zu finden sowie auch in J. Porter, H. Quener, J. Lin, K. Thorn and A. Awwal, Adaptive Optics for Vision Science (Wiley 2006**).**

**Bewertung des Unterschieds zwischen dem Lichtbündel und dem Referenz-Lichtbündel**

Nach einer Propagation durch das Brillenglas und das Auge ist die Wellenfront im Allgemeinen nicht mehr sphärisch. Für eine solche astigmatische nicht vollkorrigierte Wellenfront gibt es auf der Netzhaut ein Zerstreuungsscheibchen, das mit einer Ellipse (Zerstreuungsellipse) approximiert werden kann.

Die Bewertung der Unterschiede des Lichtbündels im Vergleich zum Referenz-Lichtbünden kann über die Parameter (wie z.B. die Größe) des Zerstreuungsscheibchens auf der Netzhaut erfolgen. In einem bevorzugten Beispiel erfolgt die Bewertung der Unterschiede über die Parameter eines Zerstreuungsscheibchens im objektseitigen Raum geometrisch-optischer Winkel, welches dem Zerstreuungsscheibchen auf der Netzhaut entspricht. Die Bewertung der Unterschiede des Lichtbündels im Vergleich zum Referenz-Lichtbündel kann insbesondere eine Zuordnung von i) geometrisch-optischen Winkeln oder ii) von einer quadratischen Form zur Beschreibung des Zerstreuungsscheibchens im objektseitigen Raum geometrisch-optischer Winkel zu der Differenzwellenfront an der Auswertefläche umfassen.

Zuordnung von geometrisch-optischen Winkeln

In einem bevorzugten Beispiel wird nicht die Größe $\Delta\mathbf{SD}$ direkt zur Optimierung verwendet, sondern zunächst aus $\Delta\mathbf{SD}$ eine noch weiter zu bildende Größe ausgerechnet, nämlich der geometrisch-optische Winkel $\gamma$ (siehe **Figur 1**).

Wie oben beschrieben, gibt es für eine astigmatische nicht vollkorrigierte Wellenfront ein Zerstreuungsscheibchen auf der Retina, das mit einer Ellipse approximiert werden kann (Zerstreuungsellipse). Der Zerstreuungsellipse auf der Retina entspricht eine Ellipse im Raum der objektseitigen geometrisch-optischen Winkel. Zu jedem festen Punkt $\mathbf{r}_s$ =$(r_{sx}, r_{sy})$ auf dem Rand der Austrittspupille (Fall a: $S$ = "$A$ "), auf dem Rand der wirksamen Pupille an der Linsenrückfläche (Fall b: $S$ = "$L$" ) oder auf dem Rand der wirksamen Pupille an einer beliebigen Auswerteebene "$s$" im Auge kann man einen geometrisch-optischen Winkel $\gamma$ =$(\gamma_x, \gamma_y)$ angeben. Denkt man sich einen Punkt $\mathbf{r}_s = r_s$ (cos $\varphi_s$ , sin $\varphi_s)^t$ auf dem Rand der jeweiligen Pupille kreisförmig umlaufend ($r_s$ = *const.*), dann beschreibt $\gamma$ im $\gamma$ - Raum eine Ellipse. Zwei Objekte können dann noch getrennt wahrgenommen werden (bezüglich eines vorläufigen und simplen Überlappkriteriums), wenn sich ihre Zerstreuungsellipsen im $\gamma$ -Raum nicht überlappen.

Der Differenzwellenfront $\Delta\mathbf{SD}_s$ an der Auswertefläche "$s$" entspricht eine Zerstreuungsellipse, welche auf Basis des folgenden Zusammenhangs beschrieben werden kann:

$$\gamma = \Delta \mathbf{Q}_s \mathbf{r}_s \qquad (7a)$$

mit

$$\Delta \mathbf{Q}_s = \mu_s \left( \mathbf{A}_s^t - \sigma_s \mathbf{C}_s^t \right) \Delta \mathbf{SD}_s \qquad (7b)$$

wobei

$$\mu_s = \begin{cases} 1 \\ d_{LR}/d_{AR} \\ \dots \end{cases} \quad \sigma_s = \begin{cases} 0 \\ \tau_{AL} \\ \dots \end{cases} \quad \Delta \mathbf{SD}_s = \begin{cases} \Delta \mathbf{SD}_A \\ \Delta \mathbf{SD}_L \\ \dots \end{cases} \quad r_s = \begin{cases} r_{AP}, & Fall\ a) \\ r_L, & Fall\ b) \\ \dots \end{cases}, \qquad (7c)$$

mit

$$\Delta \mathbf{SD}_A = \mathbf{S}_A'^{BG} - \mathbf{D}_{AR}$$
$$\Delta \mathbf{SD}_L = \mathbf{S}_L'^{BG} - \mathbf{D}_{LR} \qquad (7d)$$

$$\dots$$

In den obigen Formeln bezeichnet:

$\sigma_S$ eine (reduzierte, d.h. auf den optischen Brechungsindex bezogene) Länge, die den Abstand der Auswertefläche oder Auswertebene von der Austrittspupille AP charakterisiert;
$r_S$ den Radius der wirksamen Pupille an der Auswerteebene oder Auswertefläche im Auge;
$r_{AP}$ den Radius der Austrittspupille des Auges;
$\tau_{AL}$ den Radius der wirksamen Pupille an der Linsenrückfläche.

Die eigentliche Zerstreuungsellipse kann dann durch die Forderung $\left| \mathbf{r}_s \right|^2 = \mathbf{r}_s^t \mathbf{r}_s = r_s^2 = const$ . erzeugt werden, da dann die quadratische Form

$$\gamma^t \Delta \mathbf{Q}_s^{-1t} \Delta \mathbf{Q}_s^{-1} \gamma = r_s^2$$
$$\gamma^t \Delta \mathbf{W}_s \gamma = 1 \qquad (8)$$

mit der symmetrischen Matrix

$$\Delta \mathbf{W}_s = \Delta \mathbf{V}_s^{-1t} \Delta \mathbf{V}_s^{-1}, \qquad (9)$$

wobei

$$\Delta \mathbf{V}_s = r_s \Delta \mathbf{Q}_s \qquad (9a)$$

eine Ellipse im $\gamma$ -Raum (d.h. im Raum der geometrisch-optischen Winkel) beschreibt, deren Halbachsen durch die Wurzeln aus den inversen Eigenwerten der Matrix $\Delta \mathbf{W}_s$ gegeben sind.
Die Matrix $\Delta \mathbf{V}_s$ ist im Allgemeinen nicht symmetrisch und hat daher einen Freiheitsgrad mehr als die symmetrische Matrix $\Delta \mathbf{SD}$ (die Einheit von $\Delta \mathbf{V}_s$ ist die eines Winkels (Radian) und nicht die Dioptrie wie die einer Wellenfrontmetrik). Da der vierte, zusätzliche Freiheitsgrad jedoch nicht die Schärfe eines Bildes betrifft, sondern nur die Achslage der Unschärfe verdreht, kann der vierte Freiheitsgrad durch eine Symmetrisierungsvorschrift weg transformiert werden.

Hierzu bestimmt man eine Rotationsmatrix $\mathbf{R}_s$

$$\mathbf{R}_s = \begin{pmatrix} \cos\varphi_s & -\sin\varphi_s \\ \sin\varphi_s & \cos\varphi_s \end{pmatrix} \tag{10}$$

so, dass die Matrix $\Delta\mathbf{U}_s$

$$\Delta\mathbf{U}_s = \begin{pmatrix} \Delta U_{s,xx} & \Delta U_{s,xy} \\ \Delta U_{s,xy} & \Delta U_{s,yy} \end{pmatrix}$$

$$:= \Delta\mathbf{V}_s\mathbf{R}_s \tag{11}$$

$$= \mu_s r_s \left(\mathbf{A}_s^t - \sigma_s \mathbf{C}_s^t\right)\Delta\mathbf{SD}_s\mathbf{R}_s$$

symmetrisch ist, d.h. man muss

$$\varphi_s = \arctan\frac{\Delta Q_{xy} - \Delta Q_{yx}}{\Delta Q_{xx} + \Delta Q_{yy}} \tag{12}$$

setzen.

Weil die symmetrische Matrix $\Delta\mathbf{U}_s$ zur Beurteilung der Sehschärfe ausreichend ist, wird vorzugsweise diese oder zumindest eine davon abgeleitete Größe in die zum Berechnen bzw. Optimieren der Gläser verwendeten Zielfunktiön eingesetzt, und zwar wie unten beschrieben nicht direkt, sondern über die Zuordnung eines Visus-Werts.

Die von der Matrix $\Delta\mathbf{U}_s$ abgeleiteten Größen können eine anisotrope und eine isotrope Komponente der Matrix $\Delta\mathbf{U}_s$ sein. Hierzu eignet sich eine Zerlegung von $\Delta\mathbf{U}_s$ in einen isotropen und einen anisotropen Anteil bzw. in einer isotrope und eine anisotrope Komponente, welche über die Eigenwerte von $\Delta\mathbf{U}_s$ definiert sind:

$$\Delta u_{s1} = \frac{\Delta U_{s,xx} + \Delta U_{s,yy} + \sqrt{\left(\Delta U_{s,xx} - \Delta U_{s,yy}\right)^2 + 4\Delta U_{s,xy}^2}}{2}$$

$$\Delta u_{s2} = \frac{\Delta U_{s,xx} + \Delta U_{s,yy} - \sqrt{\left(\Delta U_{s,xx} - \Delta U_{s,yy}\right)^2 + 4\Delta U_{s,xy}^2}}{2} \tag{13}$$

Der isotrope Anteil bzw. die isotrope Komponente $\Delta U_{s,iso}$ von $\Delta\mathbf{U}_s$ wird wie folgt definiert:

$$\Delta U_{s,iso} := \frac{\Delta u_{s1} + \Delta u_{s2}}{2} = \frac{\Delta U_{s,xx} + \Delta U_{s,yy}}{2} \tag{14}$$

Der anisotrope Anteil bzw. die anisotrope Komponente $\Delta U_{s,aniso}$ von $\Delta\mathbf{U}_s$ wird wie folgt definiert:

$$\Delta U_{s,aniso} := |\Delta u_{s1} - \Delta u_{s2}| = \sqrt{\left(\Delta U_{s,xx} - \Delta U_{s,yy}\right)^2 + 4\Delta U_{s,xy}^2} \tag{15}$$

**Schritt S4: Zuordnung eines Visus-Werts zu dem bewerteten Unterschied der Lichtbündel**

Die Zuordnung eines Visus-Werts zu dem bewerteten Unterschied der Lichtbündel kann eine Zuordnung eines Visus-Werts zu der die Zerstreuungsellipse beschreibenden quadratischen Form $\Delta\mathbf{U}_s$ oder zu den von der quadratischen Form abgeleiteten Größen umfassen.

In einem Beispiel werden die Größen $\Delta U_{s,iso}$, $\Delta U_{s,aniso}$ nicht direkt zur Optimierung des Brillenglases benutzt.

Stattdessen dienen die Größen $\Delta U_{s,iso}$, $\Delta U_{s,aniso}$ als Ausgangspunkt, um auf eine durch ein gegebenes Visus-Modell definierte Weise den zu $\Delta U_{s,iso}$, $\Delta U_{s,aniso}$ gehörenden Visus zu bestimmen. Hierzu können Patientendaten bzw. Brillenträgerdaten benötigt werden, insbesondere der Visus bei Vollkorrektion $VA_{cc}$.

Unter einem Visus-Modell wird insbesondere jede Funktion $V(\Delta \mathbf{U}_s)$ verstanden, die folgende Merkmale aufweist:

- Das Argument $\Delta \mathbf{U}_s$ ist die in Gleichung (11) definierte Matrix oder zumindest eine von der Matrix $\Delta \mathbf{U}_s$ abgeleitete Größe, wie z.B. zumindest eine ihrer Komponenten, oder eine Kombination aus Komponenten. Bevorzugt ist diejenige Kombination, die die Komponenten $\Delta U_{s,iso}$, $\Delta U_{s,aniso}$ bildet.
- $V(\Delta \mathbf{U}_s)$ ist skalarwertig, und der berechnete Wert steht für den Visus. Bevorzugt ist er in Radian (also in der Bedeutung des geometrisch-optischen Winkels) anzugeben oder in Bogenminuten oder dezimalen Einheiten (zum Beispiel V=0,8; 1,0; 1,25; 1,6; 2,0) oder in Einheiten von logMAR (zum Beispiel V=-0,3; -0,2; -0,1; 0,0; 0,1; ...). Dabei gilt vorzugsweise die folgende Zuordnung:

Tabelle 1

| $V$ [Bogenminuten] | $V$ [Radian] | $V$ [dezimal] | $V$ [logMAR] |
|---|---|---|---|
| 0,5' | 0,000145 | 2,0 | -0,3 |
| 0,63' | 0,00018 | 1,6 | -0,2 |
| 0,8' | 0,00023 | 1,25 | -0,1 |
| 1,0' | 0,00029 | 1,0 | 0,0 |
| 1,25' | 0,00036 | 0,8 | +0,1 |

Geeignete Visus-Modelle sind aus dem Stand der Technik bekannt. Vorzugsweise wird jedoch ein neues Visus-Modell vorgeschlagen, das auf folgender Grundfunktion basiert:

$$V(\Delta U) = \left( \gamma_0^k + (m \, \Delta U^p)^k \right)^{1/k} \tag{16}$$

Dabei gilt:

- Das Argument $\Delta U$ ist generisch und kann eine der Größen $\Delta U_{s,iso}$, $\Delta U_{s,aniso}$, eine Kombination dieser Größen, eine andere von der Matrix $\Delta \mathbf{U}_s$ abgeleitete Größe oder eine Kombination davon sein;
- Der Parameter $\gamma_0$ ist direkt durch den Wert des geometrisch-optischen Winkels $\gamma_0$ (in Radian) gegeben, der dem Ausgangsvisus entspricht;
- Die Parameter $k$, $m$ und $p$ sind (nicht notwendig ganzzahlige) Parameter zur Beschreibung des Visusabfalls als Funktion von $\Delta U$;
- Der Ausgabewert V der Funktion in Gleichung (16) hat die Bedeutung des geometrisch-optischen Winkels (in Radian), der dem aktuellen Visus entspricht. Alle anderen Visus-Maße (also geometrisch-optischer Winkel in Bogenminuten, oder Visus dezimal oder Visus in logMAR) können nach Tabelle 1 umgerechnet werden).

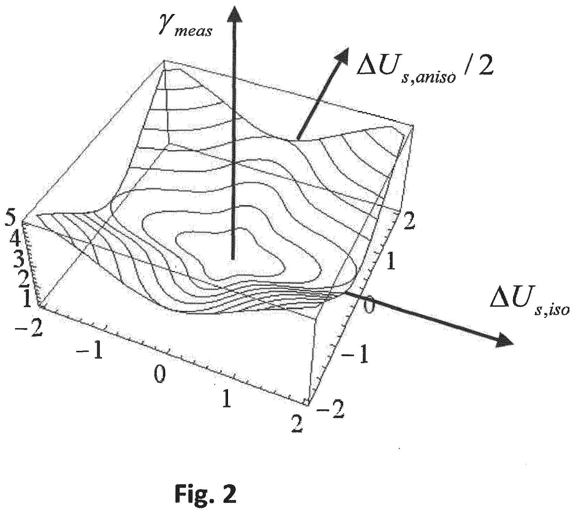

**Figur 2** zeigt ein beispielhaftes Visusmodell für $V(\Delta U_{s,iso}, \Delta U_{s,aniso})$.

Im eindimensionalen Fall (d.h. wenn nur eine Art der Nebelung vorliegt, z.B. ein Defokus), kann direkt die Grundfunktion aus Gleichung (16) verwendet werden. Sind nämlich sämtliche Komponenten des Auges rotationssym-metrisch, dann ist $\Delta U_{s,aniso}=0$ und der Visusabfall eine reine Funktion von $\Delta U_{s,iso}$ allein.

Im zweidimensionalen Fall ist es möglich, von $\Delta U_{s,iso}, \Delta U_{s,aniso}$ in Polarkoordinaten überzugehen und die fol-genden von der Matrix $\Delta \mathbf{U}_s$ abgeleiteten Größen zu definieren:

$$\tan \varphi = \frac{\Delta U_{s,aniso}/2}{\Delta U_{s,iso}} \tag{17}$$

$$\Delta U_{s,r} = \sqrt{\Delta U_{s,iso}^2 + \tfrac{1}{4} \Delta U_{s,aniso}^2}$$

Erfindungsgemäß werden folgende vereinfachende Modellannahmen aufgestellt:

a) Die Funktion $\gamma_{meas}(\Delta U_{s,iso}, \Delta U_{s,aniso})$ ist vom Vorzeichen des isotropen Anteils unabhängig, $\gamma_{meas}(-\Delta U_{s,iso}, \Delta U_{s,aniso}) = \gamma_{meas}(\Delta U_{s,iso}, \Delta U_{s,aniso})$

b) Die Funktion $\gamma_{meas}(\Delta U_{s,iso}, \Delta U_{s,aniso})$ ist vom Vorzeichen des anisotropen Anteils unabhängig, $\gamma_{meas}(\Delta U_{s,iso}, -\Delta U_{s,aniso}) = \gamma_{meas}(\Delta U_{s,iso}, +\Delta U_{s,aniso})$

c) Die Funktion $\gamma_{meas}(\Delta U_{s,r}, \varphi)$ ist für festes $\varphi$ eine Funktion der Gestalt wie in Gleichung (16)

Die Annahme c) kann zum Beispiel durch den Ansatz

$$V(\Delta U_{s,r}, \varphi) = \left( \gamma_0^{k(\varphi)} + (m(\varphi) \Delta U_{s,r}^{p(\varphi)})^{k(\varphi)} \right)^{1/k(\varphi)} \qquad (18)$$

Realisiert werden, bei dem die Gleichung (16) erweitert wird, indem die Parameter $k$, $p$, $m$ (jedoch nicht $\gamma_0$) als Funktionen der Winkelkoordinate $\varphi$ aufgefasst werden.

Die Bedingungen a) und b) verlangen

$$a) \quad \Rightarrow \quad \gamma_{meas}(\Delta U_{s,r}, \pi - \varphi) = \gamma_{meas}(\Delta U_{s,r}, \varphi)$$

$$b) \quad \Rightarrow \quad \gamma_{meas}(\Delta U_{s,r}, -\varphi) = \gamma_{meas}(\Delta U_{s,r}, +\varphi) \qquad (19)$$

und implizieren eine Periodizität mit der Periode $\pi$:

$$\gamma_{meas}(\Delta U_{s,r}, \varphi + \pi) = \gamma_{meas}(\Delta U_{s,r}, \varphi) \qquad (20)$$

Dies führt zu dem Ansatz einer in $\varphi$ geraden Fourier-Reihe mit den Termen 1, $\cos 2\varphi$, $\cos 4\varphi$, $\cos 6\varphi$, ... Es erweist sich als zweckmäßig, stattdessen die äquivalente Basis 1, $\sin^2\varphi$, $\sin^2 2\varphi$, $\sin^2 3\varphi$, .... zu benutzen, weil dann praktischerweise alle Basisfunktionen außer der ersten für $\varphi = 0$ verschwinden. Im vorliegenden Fall scheint eine Entwicklung bis zur Ordnung $\sin^2 2\varphi$ ausreichend. Daher können beispielsweise die folgenden Annäherungen angesetzt werden:

$$k(\varphi) = k_0 (1 + \kappa_1 \sin^2 \varphi + \kappa_2 \sin^2 2\varphi)$$

$$p(\varphi) = p_0 (1 + \pi_1 \sin^2 \varphi + \pi_2 \sin^2 2\varphi) \qquad (21)$$

$$m(\varphi) = m_0 (1 + \mu_1 \sin^2 \varphi + \mu_2 \sin^2 2\varphi)$$

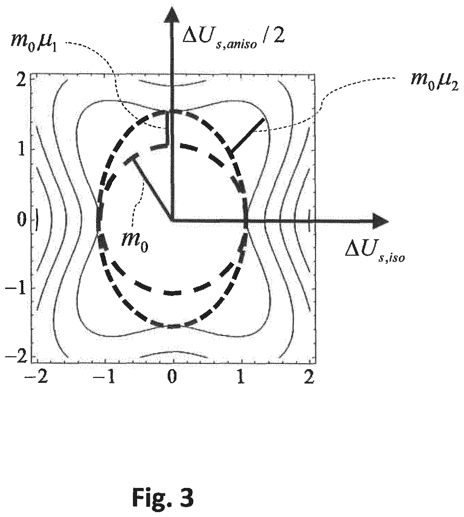

Dabei sind $k_0$, $p_0$, $m_0$ die Parameter für $\varphi = 0$, also für den rein isotropen Anteil von $\Delta \mathbf{U}_s$, und die $\kappa_i$, $\pi_i$, $\mu_i$ beschreiben das Visusmodell für das Vorhandensein anisotroper Anteile. Die Wirkung dieser Parameter ist in Figur 3 gezeigt.

**Figur 3** zeigt die Freiheitsgrade der $\varphi$-Parametrisierung des Visusmodells aus Gleichung (21) am Beispiel von $m(\varphi)$, wobei $m_0$ der Kreisradius des isotropen Sockels ($\varphi=0$) ist, $m_0\mu_1$ die Abweichung in Richtung der anisotropen Achse (näherungsweise elliptisch, $\varphi = 90°$) beschreibt, und $m_0\mu_2$ die Abweichungen von der Ellipse in Richtung $\varphi = 45°$ beschreibt.

Die Parameter des Visus-Modells können dabei frei festgelegt oder durch Datenanpassung an Visustests des Brillenträgers gewonnen werden. Bevorzugt werden bestimmte Parameter identifiziert, die nicht oder nur schwach individuell variieren, und die man folglich in einer Vorab-Studie an ein repräsentatives Ensemble anpassen kann. Nur die restlichen Parameter müssen dann an den aktuellen Brillenträger angepasst werden.

Besonders bevorzugt ist eine Auslegung des Visusmodells, bei der einige Parameter von vornherein gleich Null gesetzt werden, und die deswegen überhaupt nicht ermittelt werden müssen. Eine Ausführungsform hiervon ist definiert durch $\kappa_1 = \kappa_2 = \pi_1 = \pi_2 = 0$ entsprechend dem vereinfachten Modell

$$k(\varphi) = k_0$$

$$p(\varphi) = p_0 \tag{22}$$

$$m(\varphi) = m_0 \left(1 + \mu_1 \sin^2 \varphi + \mu_2 \sin^2 2\varphi\right)$$

und dem multidimensionalen Visusmodell der Form

$$V(\Delta U_{s,r}, \varphi) = \left( \gamma_0^{k_0} + (m(\varphi) \Delta U_{s,r}^{p_0})^{k_0} \right)^{1/k_0} \tag{23}$$

Diese Ausführungsform ist besonders bevorzugt in Kombination mit dem Vorgehen, dass die Parameter $k_0, p_0, \mu_1, \mu_2$ einmalig an ein Ensemble von Daten angepasst werden, während die Parameter $m$ und $\gamma_0$ individuell an den Brillenträger angepasst werden. Zum Beispiel ist der Parameter $\gamma_0$ direkt durch den LogMAR-Wert des Ausgangsvisus gegeben. Der Parameter $m$ kann über die Sensitivität bestimmt werden, also dadurch, dass einmalig der Visus $V^{Neb}$ bei einer deutlichen Nebelung (z.B. $\Delta S^{Neb} = 1{,}5\ Dpt$) bestimmt wird.

**Aufbau einer Zielfunktion, die vom zugeordneten Visus-Wert abhängt**

Im Stand der Technik bezüglich der Optimierung an der Scheitelpunktkugel wird eine Zielfunktion des Typs

$$F_{SPK} = \sum_i \Big[ G_{SPK,R,i} \left( R_{SPK,Ist}(i) - R_{SPK,Soll}(i) \right)^2 + G_{SPK,A,i} \left( A_{SPK,Ist}(i) - A_{SPK,Soll}(i) \right)^2$$
$$+ G_{SPK,C,i} \left( C_{SPK,Ist}(i) - C_{SPK,Soll}(i) \right)^2 + G_{SPK,S,i} \left( S_{SPK,Ist}(i) - S_{SPK,Soll}(i) \right)^2 + \dots \Big] \tag{24}$$

minimiert, wobei die ersten beiden Terme $G_{R,i}(R_{Ist}(i)-R_{Soll}(i))^2$ und $G_{A,i}(A_{Ist}(i)-A_{Soll}(i))^2$ zu den Residuen von Refraktionsfehler und Astigmatismus an der Scheitelpunktkugel gehören und die weiteren Terme den Residuen weiterer möglicher zu optimierender Merkmale an der Scheitelpunktkugel entsprechen. Die Größen $G_{SPK,R,i}, G_{SPK,A,i}, G_{SPK,C,i}, G_{SPK,S,i} \dots$ sind die Gewichte, die in der Optimierung an der Scheitelpunktkugel benutzt werden.
Im Stand der Technik bezüglich der Optimierung nach der Wellenfrontdurchrechnung in das Auge (WO 2013/104548 A1) wird eine Zielfunktion des gleichen Typs wie in Gleichung (24) minimiert, nur dass die Terme zu den entsprechenden Merkmalen der Wellenfront nach der Durchrechnung im Auge gehören:

$$F_s = \sum_i \Big[ G_{s,R,i} \left( R_{s,Ist}(i) - R_{s,Soll}(i) \right)^2 + G_{s,A,i} \left( A_{s,Ist}(i) - A_{s,Soll}(i) \right)^2$$
$$+ G_{s,C,i} \left( C_{s,Ist}(i) - C_{s,Soll}(i) \right)^2 + G_{s,S,i} \left( S_{s,Ist}(i) - S_{s,Soll}(i) \right)^2 + \dots \Big] \tag{25}$$

Im Gegensatz dazu greift die Optimierung gemäß einem Aspekt der Erfindung direkt auf Visusgrößen zu. Eine beispielhafte Zielfunktion kann somit die folgende Struktur aufweisen:

$$F_s = \sum_i \Big[ G_{s,iso,i}^V \left( V \left( \Delta U_{s,iso}(\Delta \mathbf{SD}_{s,Ist}(i)) \right) - V_{s,iso,Soll}(i) \right)^2 +$$
$$+ G_{s,aniso,i}^V \left( V \left( \Delta U_{aniso,i}(\Delta \mathbf{SD}_{s,Ist}(i)) \right) - V_{s,aniso,Soll}(i) \right)^2$$
$$+ \dots \Big] \tag{26}$$

Bevorzugt treten nach den ersten beiden Residuen keine weiteren Terme auf.
In Gleichung (26) steht $\Delta \mathbf{SD}_{s,Ist}(i)$ für den Ist-Wert der Größe $\Delta \mathbf{SD}_s$ nach Gleichung (7c), nachdem ein Brillenglas an der $i$-ten Bewertungsstelle durchgerechnet wurde.

Die Größen $V_{s,iso,Soll}(i)$ und $V_{s,aniso,Soll}(i)$ stehen für die Werte des Soll-Visus an der $i$-ten Bewertungsstelle für den isotropen bzw. den anisotropen Beitrag. $G^V_{is_{oi}}$ und $G^V_{aniso_{i}}$ sind die entsprechenden Gewichtungen.

**Beispiel 1:**

In einem ersten Beispiel sind die Werte für Soll-Visus und Gewichte frei wählbar.

**Beispiel 2:**

In einem zweiten Beispiel sind nur die Gewichte frei wählbar, und die Werte für den Soll-Visus können durch eine Transformation aus Sollvorgaben, die sich bereits durch Erfahrung bei der Optimierung an der Scheitelpunktkugel bewährt haben, gewonnen werden:

$$V_{s,iso,Soll}(i) = V(\Delta U_{s,iso}(\Delta \mathbf{SD}_{s,iso,Soll}(i)))$$
$$V_{s,aniso,Soll}(i) = V(\Delta U_{s,aniso}(\Delta \mathbf{SD}_{s,aniso,Soll}(i))) \tag{27}$$

wobei $\Delta\mathbf{SD}_{s,iso,Soll}(i)$, $\Delta\mathbf{SD}_{s,aniso,Soll}(i)$ für die Soll-Werte der Größe $\Delta\mathbf{SD}_s$ nach Gleichung (7c) an der $i$-ten Bewertungsstelle stehen und Funktionen der Sollvorgaben an der Scheitelpunktkugel sind.

Beispiel 2.1:

In einer beispielhaften Weiterbildung des Beispiels 2 sind $\Delta\mathbf{SD}_{s,iso,Soll}(i)$ und $\Delta\mathbf{SD}_{s,aniso,Soll}(i)$ durch dieselbe Funktion gegeben:

$$\Delta\mathbf{SD}_{s,iso,Soll}(i) = \Delta\mathbf{SD}_{s,aniso,Soll}(i) = \Delta\mathbf{SD}_{s,Soll}(i) \tag{28}$$

Beispiel 2.1.1:

In einer beispielhaften Weiterbildung des Beispiels 2.1, welche die HOA nicht berücksichtigt, gilt nach Gleichung (5)

$$\Delta\mathbf{SD}_{s,Soll}(i) = \mathbf{S}'^{BG}_s\left(\mathbf{S}^{BG}_{Soll}(i)\right) - \mathbf{D}_{LR}$$
$$= \mathbf{S}'^{BG}_s\left(\mathbf{S}^R(i) + \Delta\mathbf{S}^{BG}_{Soll}(i)\right) - \mathbf{D}_{LR} \tag{29}$$

wobei $\Delta\mathbf{S}^{BG}_{Soll}(i)$ die Vergenzmatrix ist, die zu einer Auswahl der Sollvorgabe oder zur Gesamtheit der Sollvorgaben gehört.

Beispiel 2.1.2:

In einer anderen Weiterbildung des Beispiels 2.1, welche die HOA berücksichtigt, gilt nach Gleichung (6)

$$\Delta\mathbf{SD}_{s,Soll}(i) = Metrik\left(\mathbf{S}'^{BG}_s\left(\mathbf{S}^{BG}_{Soll}(i)\right) - \mathbf{R}'_s\right)$$
$$= Metrik\left(\mathbf{S}'^{BG}_s\left(\mathbf{S}^R + \Delta\mathbf{S}(\Delta\mathbf{S}^{BG}_{Soll}(i))\right) - \mathbf{R}'_s\right)' \tag{30}$$

wobei $\Delta\mathbf{S}^{BG}_{Soll}(i)$ die Vergenzmatrix ist, die zu einer Auswahl der Sollvorgaben oder zur Gesamtheit der Sollvorgaben gehört. Weiter ist $\Delta\mathbf{S}(\Delta\mathbf{S}^{BG}_{Soll}(i))$ die dazugehörige Wellenfront in der gewählten Wellenfrontdarstellung.

Beispiel 2.2:

In einer Weiterbildung des Beispiels 2 sind $\Delta\mathbf{SD}_{s,iso,Soll}(i)$, $\Delta\mathbf{SD}_{s,aniso,Soll}(i)$ nicht durch dieselbe Funktion gegeben.

Beispiel 2.2.1:

In einer Weiterbildung des Beispiels 2.2, welche die HOA nicht berücksichtigt, gilt nach Gleichung (5)

$$\Delta\mathbf{SD}_{s,iso,Soll}(i) = \mathbf{S'}_s^{BG}\left(\mathbf{S}^R(i) + \Delta\mathbf{S}_{iso,Soll}^{BG}(i)\right) - \mathbf{D}_{LR}$$
$$\Delta\mathbf{SD}_{s,aniso,Soll}(i) = \mathbf{S'}_s^{BG}\left(\mathbf{S}^R(i) + \Delta\mathbf{S}_{aniso,Soll}^{BG}(i)\right) - \mathbf{D}_{LR} \tag{31}$$

wobei $\Delta\mathbf{S}_{iso,Soll}^{BG}(i), \Delta\mathbf{S}_{aniso,Soll}^{BG}(i)$ die Vergenzmatrizen sind, die beide zu unabhängigen Auswahlen der Sollvorgaben oder zur Gesamtheit der Sollvorgaben gehören. Besonders bevorzugt ist

$$\Delta\mathbf{S}_{iso,Soll}^{BG}(i) = \Delta\mathbf{S}_{R,Soll}^{BG}(i)$$
$$\Delta\mathbf{S}_{aniso,Soll}^{BG}(i) = \Delta\mathbf{S}_{A,Soll}^{BG}(i) \tag{32}$$

wobei

$$\Delta\mathbf{S}_{R,Soll}^{BG}(i) = \Delta\mathbf{S}\left(R_{SPK,Soll}(i)\right)$$
$$\Delta\mathbf{S}_{A,Soll}^{BG}(i) = \Delta\mathbf{S}\left(A_{SPK,Soll}(i)\right) \tag{33}$$

die Vergenzmatrizen sind, die den Sollwerten von Refraktionsfehler bzw. Astigmatismus entsprechen.

Beispiel 2.2.2:

In einer Weiterbildung des Beispiels 2.2, welche die HOA berücksichtigt, ist nach Gleichung (6)

$$\Delta\mathbf{SD}_{s,iso,Soll}(i) = Metrik\left(\mathbf{S'}_s^{BG}\left(\mathbf{S}^R + \Delta\mathbf{S}\left(\Delta\mathbf{S}\left(R_{SPK,Soll}(i)\right)\right)\right) - \mathbf{R'}_s\right)$$
$$\Delta\mathbf{SD}_{s,aniso,Soll}(i) = Metrik\left(\mathbf{S'}_s^{BG}\left(\mathbf{S}^R + \Delta\mathbf{S}\left(\Delta\mathbf{S}\left(A_{SPK,Soll}(i)\right)\right)\right) - \mathbf{R'}_s\right) \tag{34}$$

**Parameter des Visusmodells:**

Die Transformationen im Fall ohne HOA

$$\Delta\mathbf{S} \xrightarrow{\mathbf{A}} \Delta\mathbf{SD}_s \xrightarrow{\mathbf{A},r_{EP}} \Delta\mathbf{U}_s \xrightarrow{\omega_0} V \tag{35}$$

und die Transformationen im Fall mit HOA

$$\Delta\mathbf{S} \rightarrow \Delta\mathbf{S} \xrightarrow{\mathbf{A}} \Delta\mathbf{SD}_s \xrightarrow{\mathbf{A},r_{EP}} \Delta\mathbf{U}_s \xrightarrow{\omega_0} V \tag{36}$$

hängen noch von den folgenden Parametern ab: der Übergang von $\Delta$S bzw. $\Delta\mathbf{S}$ nach $\Delta\mathbf{SD}_s$ hängt vom Augenmodell ab, dessen Parameter im Vektor **A** zusammengefasst werden; der Übergang von $\Delta\mathbf{SD}_s$ nach $\Delta\mathbf{U}_s$ hängt vom Augenmodell

**A** ab, und zusätzlich von der Eintrittspupille $r_{EP}$; und der Übergang von $r_{EP}$ nach $V$ hängt vom Visus-Modell ab, dessen Parameter im Vektor $\omega_0$ zusammengefasst sind. Für das bevorzugte Visus-Modell gilt

$$\omega_0 = \begin{pmatrix} \gamma_0 \\ m_0 \end{pmatrix} \tag{37}$$

sowie für das bevorzugte Augenmodell im rein sphärischen Fall ohne HOA

$$\mathbf{A}(C,M,Akk) = \begin{pmatrix} C \\ L_1(C,M,Akk) \\ L_2(Akk) \\ \tau_{CL}(Akk) \\ \tau_L(Akk) \\ \tau_{LR}(M) \end{pmatrix}; \tag{38a}$$

im sphäro-zylindrischen Fall ohne HOA

$$\mathbf{A}(\mathbf{C},M,\mathbf{J},Akk) = \begin{pmatrix} \mathbf{C} \\ \mathbf{L}_1(\mathbf{C},M,\mathbf{J},Akk) \\ L_2(Akk) \\ \tau_{CL}(Akk) \\ \tau_L(Akk) \\ \tau_{LR}(M) \end{pmatrix}; \tag{38b}$$

sowie im allgemeinen Fall inklusive HOA

$$\mathbf{A}(C,W,Akk) = \begin{pmatrix} C \\ L_1(C,W,Akk) \\ L_2(Akk) \\ \tau_{CL}(Akk) \\ \tau_L(Akk) \\ \tau_{LR}(M) \end{pmatrix} \tag{38c}$$

wobei $(M,J)^T$ der Power-Vektor der subjektiven Verordnung und *Akk* die Akkommodation ist.

In den obigen Formeln bezeichnen:

C den Cornea-Datensatz inklusive höherer Ordnungen;
$L_1$ den Datensatz für Linsenvorderfläche inklusive höherer Ordnungen;
$L_2$ den Datensatz für Linsenrückfläche inklusive höherer Ordnungen.

Dabei entspricht die verwendete Nomenklatur derjenigen aus der Druckschrift WO 2013/104548 A1.
Weiterhin werden Standardbelegungen dieser Modelle zur Verfügung gestellt, die bevorzugt durch die Bevölkerungsdurchschnittswerte definiert sind. Die Standardwerte der Parameter werden durch eine hochgestellte ‚0' gekennzeichnet.

Für eine Standard-Eintrittspupille steht das Symbol $r_{EP}^0$ , für ein Standard-Visus-Modell gilt

$$\omega_0^0 = \begin{pmatrix} \gamma_0^0 \\ m_0^0 \end{pmatrix} ; \tag{39}$$

für das bevorzugte Standard-Augenmodell im rein sphärischen Fall ohne HOA gilt

$$\mathbf{A}^0(M, Akk) = \begin{pmatrix} C(L_1^0, M) \\ L_1(L_1^0, Akk) \\ L_2(Akk) \\ \tau_{CL}^0(Akk) \\ \tau_L(Akk) \\ \tau_{LR}(M) \end{pmatrix} ; \tag{40a}$$

im sphäro-zylindrischen Fall ohne HOA gilt

$$\mathbf{A}^0(M, Akk) = \begin{pmatrix} C(L_1^0, M, \mathbf{J} = \mathbf{0}) \\ L_1(L_1^0, Akk) \\ L_2(Akk) \\ \tau_{CL}^0(Akk) \\ \tau_L(Akk) \\ \tau_{LR}(M) \end{pmatrix} ; \tag{40b}$$

sowie im allgemeinen Fall inklusive HOA gilt

$$\mathbf{A}^0(W^0, Akk) = \begin{pmatrix} C(L_1^0, W^0) \\ L_1(L_1^0, Akk) \\ L_2(Akk) \\ \tau_{CL}^0(Akk) \\ \tau_L(Akk) \\ \tau_{LR}(M) \end{pmatrix} , \tag{40c}$$

wobei die einer Fehlsichtigkeit ($M, J_0, J_{45}$) mit Standard-HOA zugeordnete Wellenfront $W^0$ gegeben ist durch

$$W^0(M) = \begin{pmatrix} c_2^0(M) \\ c_2^2(J_0 = 0) \\ c_2^{-2}(J_{45} = 0) \\ c_3^3 \\ \vdots \end{pmatrix} \tag{41}$$

Bevorzugt wird der Visus V für die aktuelle Durchrechnung mit den individuellen Parametern durchgeführt, die Berechnung des Soll-Visus dagegen unter Verwendung der Standard-Parameter. Sind nur Teilmengen der Parameter bekannt (z.B. weil zwar die Parameter des Augenmodells individuell vorliegen, nicht aber die des Visus-Modells), dann werden bevorzugt die unbekannten Parameter auch in der aktuellen Durchrechnung durch Standardwerte ersetzt.

**Beispiel 3:**

In einem besonders bevorzugten Beispiel sind weder die Gewichte noch die Sollvorgaben frei wählbar, sondern beide können durch eine Transformation aus den Gewichten und Sollvorgaben, die sich bereits durch Erfahrung bei der Optimierung an der Scheitelpunktkugel bewährt haben, gewonnen werden.

Die Sollvorgaben können wie in Zusammengang mit den obigen Ausführungsformen 2.1, 2.1.1 ... 2.2.2 bestimmt werden. Bezüglich der Gewichte unterscheiden sich mögliche Ausführungsformen darin, welche Modellparameter bei welcher Transformation verwendet werden. Die Funktionen aus Gleichung (35) bzw. Gleichung (36) können wie folgt bezeichnet werden:

$$
\begin{aligned}
&\Delta \mathrm{SD}_s\left(\Delta \mathrm{S}^{BG}, \mathbf{A}\right) \\
&\Delta \mathbf{U}_s\left(\Delta \mathrm{SD}_s, \mathbf{A}, r_{EP}\right) \\
&V\left(\Delta \mathbf{U}_s, \omega_0\right)
\end{aligned}
\tag{42}
$$

Es wird gefordert, dass für einen Brillenträger, für den sämtliche Parameter den Standardparametern entsprechen ( $\Delta \mathrm{S}^{BG}, \mathbf{A} = \mathbf{A}^0, r_{EP} = r_{EP}^0, \omega_0 = \omega_0^0, \mathbf{J} = 0$ ), eine Optimierung mittels der Zielfunktion $F_s$ aus Gleichung (26) auf dasselbe Brillenglas führt wie eine Optimierung mittels der Zielfunktion $F_{SPK}$ aus Gleichung (24) nach dem Stand der Technik. Dadurch wird sichergestellt, dass Verbesserungen gegenüber dem Stand der Technik gezielt durch die Abweichungen der Parameter von ihren Standardwerten gesteuert werden können.

In einer Ausführungsform der Erfindung wird die Gleichheit der Optimierungsergebnisse dadurch sichergestellt, dass für Standardwerte jeder Term aus der Zielfunktion $F_s$ gleich einem korrespondierenden Term aus der Zielfunktion $F_{SPK}$ ist.

In einer Ausführungsform wird dies gewährleistet durch die Forderung

$$
\begin{aligned}
&G^V_{s,iso,i}\left[V\left(\Delta U_{s,iso}\left(\Delta \mathrm{SD}_s\left(\Delta \mathrm{S}^{BG}(i), \mathbf{A}^0\right), \mathbf{A}^0, r_{EP}^0\right), \omega_0^0\right)\right.\\
&\left.\quad - V\left(\Delta U_{s,iso}\left(\Delta \mathrm{SD}_s\left(\Delta \mathrm{S}^{BG}_{iso,Soll}(i), \mathbf{A}^0\right), \mathbf{A}^0, r_{EP}^0\right), \omega_0^0\right)\right]^2 = G_{SPK,R,i}\left(A_{SPK,Ist}(i) - A_{SPK,Soll}(i)\right)^2 \\
&G^V_{s,aniso,i}\left[V\left(\Delta U_{s,aniso}\left(\Delta \mathrm{SD}_s\left(\Delta \mathrm{S}^{BG}(i), \mathbf{A}^0\right), \mathbf{A}^0, r_{EP}^0\right), \omega_0^0\right)\right.\\
&\left.\quad - V\left(\Delta U_{s,aniso}\left(\Delta \mathrm{SD}_s\left(\Delta \mathrm{S}^{BG}_{aniso,Soll}(i), \mathbf{A}^0\right), \mathbf{A}^0, r_{EP}^0\right), \omega_0^0\right)\right]^2 = G_{SPK,R,i}\left(R_{SPK,Ist}(i) - R_{SPK,Soll}(i)\right)^2
\end{aligned}
\tag{43}
$$

was für die Gewichte bedeutet

$$G_{s,iso,i}^{V} =$$

$$\frac{G_{SPK,R,i}\left(A_{SPK,Ist}(i) - A_{SPK,Soll}(i)\right)^{2}}{\left[V\left(\Delta U_{s,iso}\left(\Delta \mathbf{SD}_{s}(\Delta \mathbf{S}^{BG}(i),\mathbf{A}^{0}),\mathbf{A}^{0},r_{EP}^{0}\right),\omega_{0}^{0}\right) - V\left(\Delta U_{s,iso}\left(\Delta \mathbf{SD}_{s}(\Delta \mathbf{S}_{iso,Soll}^{BG}(i),\mathbf{A}^{0}),\mathbf{A}^{0},r_{EP}^{0}\right),\omega_{0}^{0}\right)\right]^{2}}$$

$$G_{s,aniso,i}^{V} =$$

$$\frac{G_{SPK,R,i}\left(R_{SPK,Ist}(i) - R_{SPK,Soll}(i)\right)^{2}}{\left[V\left(\Delta U_{s,aniso}\left(\Delta \mathbf{SD}_{s}(\Delta \mathbf{S}^{BG}(i),\mathbf{A}^{0}),\mathbf{A}^{0},r_{EP}^{0}\right),\omega_{0}^{0}\right) - V\left(\Delta U_{s,iso}\left(\Delta \mathbf{SD}_{s}(\Delta \mathbf{S}_{aniso,Soll}^{BG}(i),\mathbf{A}^{0}),\mathbf{A}^{0},r_{EP}^{0}\right),\omega_{0}^{0}\right)\right]^{2}}$$

$$(43a)$$

In einer weiteren, bevorzugten Ausführungsform wird dies gewährleistet durch die Forderung

$$G_{s,iso,i}^{V}\left[V\left(\Delta U_{s,iso}\left(\Delta \mathbf{SD}_{s}(\Delta \mathbf{S}^{BG}(i),\mathbf{A}^{0}),\mathbf{A}^{0},r_{EP}^{0}\right),\omega_{0}^{0}\right)\right.$$
$$\left. - V\left(\Delta U_{s,iso}\left(\Delta \mathbf{SD}_{s}(\Delta \mathbf{S}_{iso,Soll}^{BG}(i),\mathbf{A}^{0}),\mathbf{A}^{0},r_{EP}^{0}\right),\omega_{0}^{0}\right)\right]^{2} = G_{SPK,R,i}\left(R_{SPK,Ist}(i) - R_{SPK,Soll}(i)\right)^{2}$$

$$G_{s,aniso,i}^{V}\left[V\left(\Delta U_{s,aniso}\left(\Delta \mathbf{SD}_{s}(\Delta \mathbf{S}^{BG}(i),\mathbf{A}^{0}),\mathbf{A}^{0},r_{EP}^{0}\right),\omega_{0}^{0}\right)\right.$$
$$\left. - V\left(\Delta U_{s,aniso}\left(\Delta \mathbf{SD}_{s}(\Delta \mathbf{S}_{aniso,Soll}^{BG}(i),\mathbf{A}^{0}),\mathbf{A}^{0},r_{EP}^{0}\right),\omega_{0}^{0}\right)\right]^{2} = G_{SPK,R,i}\left(A_{SPK,Ist}(i) - A_{SPK,Soll}(i)\right)^{2}$$

$$(44)$$

was für die Gewichte bedeutet

$$G_{s,iso,i}^{V} =$$

$$\frac{G_{SPK,R,i}\left(R_{SPK,Ist}(i) - R_{SPK,Soll}(i)\right)^{2}}{\left[V\left(\Delta U_{s,iso}\left(\Delta \mathbf{SD}_{s}(\Delta \mathbf{S}^{BG}(i),\mathbf{A}^{0}),\mathbf{A}^{0},r_{EP}^{0}\right),\omega_{0}^{0}\right) - V\left(\Delta U_{s,iso}\left(\Delta \mathbf{SD}_{s}(\Delta \mathbf{S}_{iso,Soll}^{BG}(i),\mathbf{A}^{0}),\mathbf{A}^{0},r_{EP}^{0}\right),\omega_{0}^{0}\right)\right]^{2}}$$

$$G_{s,aniso,i}^{V} =$$

$$\frac{G_{SPK,R,i}\left(A_{SPK,Ist}(i) - A_{SPK,Soll}(i)\right)^{2}}{\left[V\left(\Delta U_{s,aniso}\left(\Delta \mathbf{SD}_{s}(\Delta \mathbf{S}^{BG}(i),\mathbf{A}^{0}),\mathbf{A}^{0},r_{EP}^{0}\right),\omega_{0}^{0}\right) - V\left(\Delta U_{s,iso}\left(\Delta \mathbf{SD}_{s}(\Delta \mathbf{S}_{aniso,Soll}^{BG}(i),\mathbf{A}^{0}),\mathbf{A}^{0},r_{EP}^{0}\right),\omega_{0}^{0}\right)\right]^{2}}$$

$$(44a)$$

Ein Vorteil des erfindungsgemäßen Vorgehens ist es, dass sich die Zielfunktion

$$F_{s} = \sum_{i}\left[G_{s,iso,i}^{V}\left[V\left(\Delta U_{s,iso}\left(\Delta \mathbf{SD}_{s}(\Delta \mathbf{S}^{BG}(i),\mathbf{A}),\mathbf{A},r_{EP}\right),\omega_{0}\right) - V\left(\Delta U_{s,iso}\left(\Delta \mathbf{SD}_{s}(\Delta \mathbf{S}_{iso,Soll}^{BG}(i),\mathbf{A}^{0}),\mathbf{A}^{0},r_{EP}^{0}\right),\omega_{0}^{0}\right)\right]^{2} + \right.$$
$$\left. + G_{s,aniso,i}^{V}\left[V\left(\Delta U_{s,aniso}\left(\Delta \mathbf{SD}_{s}(\Delta \mathbf{S}^{BG}(i),\mathbf{A}),\mathbf{A},r_{EP}\right),\omega_{0}\right) - V\left(\Delta U_{s,aniso}\left(\Delta \mathbf{SD}_{s}(\Delta \mathbf{S}_{aniso,Soll}^{BG}(i),\mathbf{A}^{0}),\mathbf{A}^{0},r_{EP}^{0}\right),\omega_{0}^{0}\right)\right]^{2}\right]$$

$$(45)$$

für Standardwerte auf $F_{SPK}$ reduziert, für Nicht-Standardwerte dagegen Veränderungen bewirkt, durch die sich die Aberrationen des Brillenglases anders verteilen auf eine Weise, die für gegebene Parameter (z.B. Visus-Modell) zu Vorteilen führt.

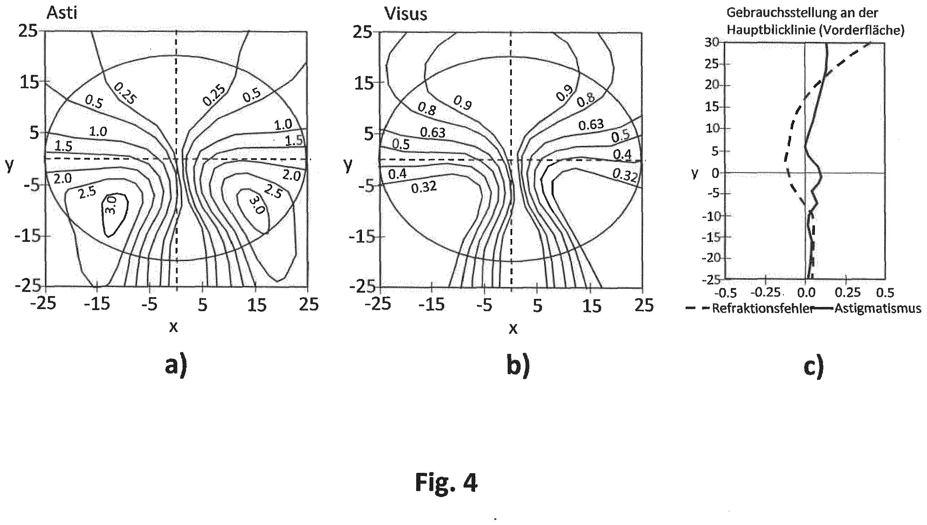

**Figur 4** zeigt die Ergebnisse einer Standard-Optimierung eines Brillenglases an der Scheitelpunktkugel (SPK) für eine Verordnung von Sphäre Sph = -4,25 Dpt, Zylinder Zyl = 0 Dpt und Addition Add = 2,5 Dpt. Fig. 4a zeigt die Verteilung des Astigmatismus (Asti), Fig. 4b die Verteilung des Visus und Fig. 4c zeigt den Verlauf des Refraktionsfehlers (gestrichelte Linie) und des Astigmatismus (durchgezogene Linie) entlang der Hauptlinie auf der Vorderfläche des Brillenglases. Das Brillenglas wird mit Standardwerten für die Cornea, die HOA und das Visus-Modell: Ausgangsvisus=1,25 (dezimal), dagegen bei Nebelung mit 1,3 Dpt nur noch Visus=0,97 nach dem Stand der Technik an der Scheitelpunktkugel optimiert.

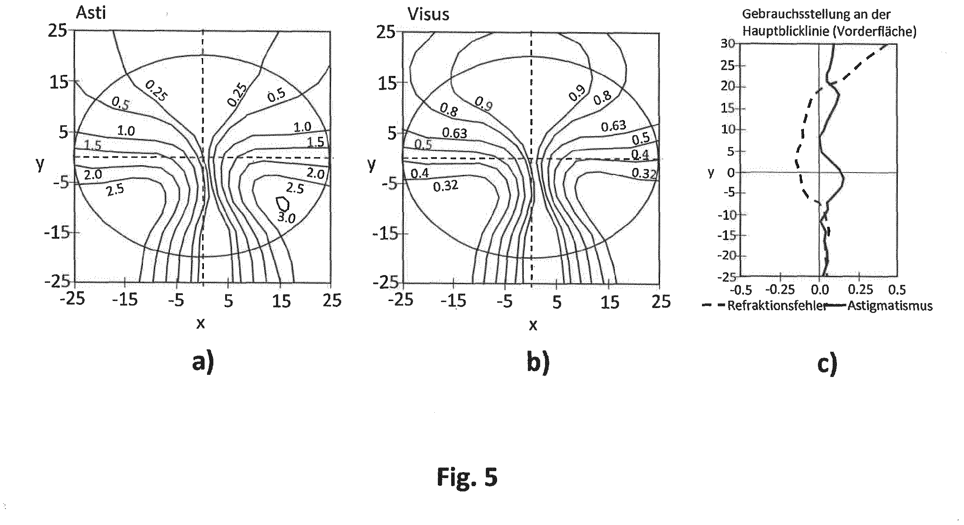

**Figur 5** zeigt das Ergebnis einer Optimierung eines Brillenglases mit Durchrechnung in das Auge und mit vom Standard abweichenden Parametern des Visus-Modells, nämlich mit geringerem Ausgangsvisus. Fig. 5a zeigt die Verteilung des Astigmatismus (Asti), Fig. 5b zeigt die Verteilung des Visus und Fig. 5c zeigt den Verlauf des Refraktionsfehlers (gestrichelte Linie) und des Astigmatismus (durchgezogene Linie) entlang der Hauptlinie auf der Vorderfläche des Brillenglases.

Wird das in Figur 4 gezeigte Brillenglas mit den Werten Sph = -4,25 Dpt, Zyl = 0 Dpt und Add = 2,5 Dpt für einen Brillenträger mit abweichenden Visusdaten (Ausgangsvisus=1, 00 (dezimal) dagegen bei Nebelung mit 1,3 Dpt nur noch Visus=0,9) optimiert, dann ergibt sich das in **Figur 5** gezeigte Ergebnis. Man erkennt, dass das Brillenglas als Folge der angepassten Gewichtsfaktoren in Gleichung (45) einen geringeren peripheren Astigmatismus erhält. Zwar werden im Brillenglas die Zonen guter Sicht geringfügig kleiner, was jedoch für einen Brillenträger mit geringerem Ausgangsvisus keinen gravierenden Nachteil darstellt, aber dafür überwiegen die Vorteile aufgrund des geringeren peripheren Astigmatismus und des damit verbundenen geringeren Schaukel-Effektes.

**Bezugszeichenliste**

| | |
|---|---|
| EP | Eintrittspupille des Auges; |
| AP | Austrittspupille des Auges; |
| SK | Scheitelpunktkugel; |
| $e$ | Hornhautscheitelabstand; |
| $r_0$ | Pupillenradius, hier nur generisch verwendet als Referenz-Radius bei der Beschreibung durch Zernike-Koeffizienten; |
| $r_R$ | Radius des Zerstreuungsscheibchens |
| $d_{LR}$ | Abstand der Linsenrückfläche von der Austrittspupille |
| $d_{AR}$ | Abstand der Linsenrückfläche von der Netzhaut |

**Patentansprüche**

1. Computerimplementiertes Verfahren zum Berechnen oder zum Bewerten eines Brillenglases für ein Auge eines Brillenträgers zum Zweck der Herstellung dieses Brillenglases umfassend die Schritte

a) Bereitstellen einer Zuordnung $V(\Delta U_{s,j}(i))$ zumindest einer Abbildungseigenschaft bzw. Aberration $\Delta U_{s,j}$ eines Brillenglassystems zum Visus des Brillenträgers oder eines durchschnittlichen Brillenträgers beim Betrachten eines Objekts durch das Brillenglassystem,

b) Bestimmen oder Vorgeben einer Zielfunktion $$F_s = \sum \left[ G_{s,j,i}^V \left( V_{Ist}\left( \Delta U_{s,j}(i)\right) - V_{Soll}\left( \Delta U_{s,j}(i)\right)\right)^2 + \ldots \right]$$ für das zu berechnende oder das zu bewertende Brillenglas, in welcher die Zuordnung aus Schritt (a) auszuwerten ist,

c) Berechnen oder Bewerten des zu berechnenden oder zu bewertenden Brillenglases durch Auswerten der Zielfunktion, wobei die Zielfunktion mindestens einmal ausgewertet wird,

wobei:

das Subskript seine Auswertefläche der zumindest einen Abbildungseigenschaft bzw. Aberration;
das Subskript $i$, mit i = 1, 2, 3, ..., N, eine Bewertungsstelle an der Auswertefläche;
das Subskript $j$, $j \geq 1$ die j-te Abbildungseigenschaft bzw. Aberration;
$V_{Ist}(\Delta U_{s,j}(i))$ den Visus, welcher anhand der Zuordnung und dem tatsächlichen Wert der zumindest einen Abbildungseigenschaft des zu optimierenden oder zu bewertenden Brillenglases an der $i$-ten Bewertungsstelle ermittelt wird, und

$V_{Soll}(\Delta U_{s,j}(i))$ den entsprechenden Sollwert des Visus bezeichnet.

2. Verfahren nach Anspruch 1, wobei das Berechnen ein Optimieren des Brillenglases durch Minimieren oder Maximieren der Zielfunktion umfasst.

3. Verfahren nach Anspruch 1 oder 2, wobei das Verfahren ferner umfasst:

Durchrechnen mindestens eines von dem Objekt ausgehenden Lichtbündels für zumindest eine Blickrichtung mit Hilfe von Wellenfrontdurchrechnung, Strahldurchrechnung oder Wellenfelddurchrechnung durch das Brillenglassystem und/oder durch das zu berechnende oder zu bewertende Brillenglas bis hin zu einer Auswertefläche im Brillenglassystem.

4. Verfahren nach Anspruch 3, wobei das Verfahren ferner umfasst:

Berechnen des an der Auswertefläche vorhandenen Unterschieds des vom Objekt ausgehenden Lichtbündels im Vergleich zu einem auf der Netzhaut eines Modellauges konvergierenden Referenz-Lichtbündel, Bestimmen der zumindest einen Abbildungseigenschaft bzw. Aberration anhand des berechneten Unterschieds

5. Verfahren nach Anspruch 3 oder 4, wobei das Durchrechen mindestens eines von dem Objekt ausgehenden Lichtbündels mittels Wellenfrontdurchrechnung erfolgt und wobei das Berechnen des an der Auswertefläche vorhandenen Unterschieds ein Berechnen der Wellenfront-Differenz zwischen der Wellenfront des vom Objekt ausgehenden Lichtbündels und der Wellenfront des auf der Netzhaut konvergierenden Referenz-Lichtbündels umfasst, wobei die Wellenfront-Differenz an der Auswertfläche berechnet wird.

6. Verfahren nach Anspruch 5, ferner umfassend ein Zuordnen eines geometrisch-optischen Winkels und/oder einer quadratischen Form im Raum geometrisch-optischer Winkel zu der berechneten Wellenfront-Differenz, wobei die zumindest eine Abbildungseigenschaft bzw. Aberration von zumindest einer Komponente des geometrisch-optischen Winkels und/oder der quadratischen Form abhängt.

7. Verfahren nach einem der vorangegangenen Ansprüche, wobei die Zuordnung der zumindest einen Abbildungseigenschaft bzw. Aberration eines Brillenglassystems zum Visus des Brillenträgers parametrisch vom gemessenen Ausgangsvisus und/oder der gemessenen Sensitivität des Brillenträgers abhängt, wobei die gemessene Sensitivität des Brillenträgers insbesondere dem Visus des Brillenträgers entspricht, welcher bei einer vorgegebenen Fehlkorrektion gemessen wurde.

8. Verfahren nach einem der vorangegangenen Ansprüche, wobei die Zuordnung der zumindest einen Abbildungseigenschaft bzw. Aberration des Brillenglassystems zum Visus anhand von einem oder mehreren bereitgestellten Werte-Paaren aus:

einem Visus-Wert eines der Augen des Brillenträgers beim Sehen durch das Brillenglassystem und einer sphärischen und/oder astigmatischen Brechkraft des Brillenglassystems bestimmt wird.

9. Verfahren nach Anspruch 8, wobei:

bei einem der Werte-Paare die Brechkraft durch den Refraktionswert eines der Augen des Brillenträgers gegeben ist, und/oder bei einem der Werte-Paare die Brechkraft durch den Refraktionswert eines der Augen des Brillenträgers zuzüglich einer sphärischen und/oder astigmatischen Nebelung gegeben ist, wobei optional ein der Nebelung entsprechender dioptrischer Abstand von dem Refraktionswert eines Modellauges einen Wert zwischen 0,5 Dpt und 3,0 Dpt aufweist.

10. Verfahren nach einem der vorangegangenen Ansprüche, wobei das Brillenglassystem ein Brillenglas und ein Modellauge umfasst, wobei das Modellauge mit zumindest einem der folgenden Parameter beschrieben wird: Augenlänge, Abstände und Krümmungen der brechenden Flächen, Brechzahlen der brechenden Medien, Pupillendurchmesser, Position der Pupille.

**11.** Verfahren nach Anspruch 10, wobei mindestens einer der Parameter des Modellauges bei dem Brillenträger individuell gemessen wurde und/oder aus individuellen Messwerten bestimmt wird.

**12.** Vorrichtung zum Berechnen oder Bewerten eines Brillenglases für einen Brillenträger umfassend Rechenmittel, welche eingerichtet sind, das Brillenglas nach einem Verfahren zum Berechnen oder zum Bewerten eines Brillenglases gemäß einem der Ansprüche 1 bis 11 zu berechnen oder zu bewerten.

**13.** Computerprogrammerzeugnis, welches einen Programmcode enthält, der ausgelegt und eingerichtet ist, wenn geladen und ausgeführt auf einem Computer, ein Verfahren zum Berechnen oder Bewerten eines Brillenglases gemäß einem der Ansprüche 1 bis 11 durchzuführen.

**14.** Verfahren zum Herstellen eines Brillenglases umfassend:

Berechnen eines Brillenglases nach dem Verfahren zum Berechnen eines Brillenglases gemäß einem der Ansprüche 1 bis 11; und
Fertigen des so berechneten Brillenglases.

**15.** Vorrichtung zum Herstellen eines Brillenglases umfassend:

Berechnungs- oder Optimierungsmittel, welche ausgelegt sind, das Brillenglas nach einem Verfahren zum Berechnen eines Brillenglases gemäß einem der Ansprüche 1 bis 11 zu berechnen; und
Bearbeitungsmittel, welche ausgelegt sind, das Brillenglas gemäß dem Ergebnis der Berechnung zu bearbeiten.

**Claims**

**1.** Computer-implemented method for calculating or evaluating a spectacle lens for an eye of a spectacle wearer for the purpose of manufacturing this spectacle lens, comprising the steps of

a) providing an assignment $V(\Delta U_{s,j}(i))$ of at least one aberration $\Delta U_{s,j}$ of a spectacle lens system to the visual acuity of the spectacle wearer or an average spectacle wearer when viewing an object through the spectacle lens system,
b) determining or prescribing an objective function

$$F_s = \sum \left[ G_{s,j,i}^V \left( V_{actual} \left( \Delta U_{s,j}(i) \right) - V_{nominal} \left( \Delta U_{s,j}(i) \right) \right)^2 + \dots \right]$$ for the lens to be calculated or the lens to be evaluated, in which the assignment from step (a) is to be evaluated,
c) calculating or evaluating the spectacle lens to be calculated or evaluated by evaluating the objective function, wherein the objective function is evaluated at least once,

the subscript s evaluating its evaluation area of the at least one imaging property or aberration;
the subscript i, with i = 1, 2, 3, ..., N, an evaluation point on the evaluation surface;
the subscript $j$, $j \geq 1$ the j-th mapping property or aberration;
$V_{actual}(\Delta U_{s,j}(i))$ the visual acuity, which is determined on the basis of an assignment and the actual value of the at least one imaging property of the spectacle lens to be optimized or evaluated at the i-th evaluation point; and
$V_{nominal}(\Delta U_{s,j}(i))$ denotes the corresponding nominal value of the visual acuity.

**2.** The method according to claim 1, wherein the calculating comprises optimizing the lens by minimizing or maximizing the objective function.

**3.** The method according to claim 1 or 2, wherein the method further comprises:
calculating through at least one light beam emanating from the object for at least one viewing direction by means of wavefront calculation, ray calculation or wavefield calculation through the spectacle lens system and/or through the spectacle lens to be calculated or evaluated up to an evaluation surface in the spectacle lens system.

**4.** The method according to claim 3, wherein the method further comprises:

calculating the difference, present at the evaluation surface, of the light beam emanating from the object compared to a reference light beam converging on the retina of a model eye,

determining the at least one imaging property or aberration on the basis of the calculated difference.

5. The method according to claim 3 or 4, wherein the raking of at least one light beam emanating from the object is performed by means of wavefront raking, and wherein the calculation of the difference present at the evaluation surface comprises a calculation of the wavefront difference between the wavefront of the light beam emanating from the object and the wavefront of the reference light beam converging on the retina, wherein the wavefront difference is calculated at the evaluation surface.

6. The method according to claim 5, further comprising associating a geometrical-optical angle and/or a quadratic shape in the space of geometrical-optical angles with the calculated wavefront difference, wherein the at least one aberration depends on at least one component of the geometrical-optical angle and/or the quadratic shape.

7. The method according to one of the preceding claims, wherein the assignment of the at least one imaging property or aberration of a spectacle lens system to the visual acuity of the spectacle wearer depends parametrically on the measured initial visual acuity and/or the measured sensitivity of the spectacle wearer, wherein the measured sensitivity of the spectacle wearer corresponds in particular to the visual acuity of the spectacle wearer which was measured with a predetermined miscorrection.

8. The method according to one of the preceding claims, wherein the assignment of the at least one imaging property or aberration of the spectacle lens system to the visual acuity is carried out on the basis of one or more provided value pairs from:

a visual acuity value of one of the eyes of the spectacle wearer when looking through the spectacle lens system and
a spherical and/or astigmatic refractive power of the spectacle lens system.

9. The method according to claim 8, wherein:

in one of the pairs of values, the refractive power is given by the refraction value of one of the eyes of the spectacle wearer, and/or
in one of the pairs of values, the refractive power is given by the refractive value of one of the eyes of the spectacle wearer plus a spherical and/or astigmatic fogging, wherein optionally a dioptric distance corresponding to the fogging from the refractive value of a model eye has a value between 0.5 Dpt and 3.0 Dpt.

10. The method according to any one of the preceding claims, wherein the spectacle lens system comprises a spectacle lens and a model eye, wherein the model eye is described by at least one of the following parameters: eye length, distances and curvatures of the refractive surfaces, refractive indices of the refractive media, pupil diameter, position of the pupil.

11. The method according to claim 10, wherein at least one of the parameters of the model eye has been individually measured in the spectacle wearer and/or is determined from individual measured values.

12. A device for calculating or evaluating a spectacle lens for a spectacle wearer comprising computing means which are set up to calculate or evaluate the spectacle lens according to a method for calculating or evaluating a spectacle lens according to any of claims 1 to 11.

13. A computer program product comprising program code designed and arranged, when loaded and executed on a computer, to perform a method for calculating or evaluating an ophthalmic lens according to any of claims 1 to 11.

14. A method of manufacturing an ophthalmic lens comprising:

calculating an eyeglass lens according to the method for calculating an eyeglass lens according to any one of claims 1 to 11; and
manufacturing the spectacle lens thus calculated.

15. An apparatus for manufacturing an ophthalmic lens comprising:

Calculating or optimizing means adapted to calculate the spectacle lens according to a method for calculating a spectacle lens according to any one of claims 1 to 11; and

processing means adapted to process the spectacle lens according to the result of the calculation.

## Revendications

1. Procédé mis en oeuvre par ordinateur pour calculer ou évaluer un verre de lunettes pour l'oeil d'un porteur de lunettes dans le but de fabriquer ce verre de lunettes, comprenant les étapes suivantes

   a) Fournir une association $V(\Delta U_{s,j}(i))$ d'au moins une propriété d'imagerie ou aberration $\Delta U_{s,j}$ d'un système de verres de lunettes à l'acuité visuelle du porteur de lunettes ou d'un porteur de lunettes moyen lorsqu'il observe un objet à travers le système de verres de lunettes,

   b) déterminer ou prescrire une fonction cible $F_s = \sum \left[ G^V_{s,j,i} \left( V_{r\acute{e}el} \left( \Delta U_{s,j}(i) \right) - V_{cible} \left( \Delta U_{s,j}(i) \right) \right)^2 + ... \right]$ pour le verre de lunettes à calculer ou à évaluer, dans laquelle l'association de l'étape (a) doit être évaluée,

   c) calculer ou évaluer le verre de lunettes à calculer ou à évaluer en évaluant la fonction cible, la fonction cible étant évaluée au moins une fois,

   le sous-script s étant sa surface d'évaluation de l'au moins une propriété d'image ou aberration ;

   le sous-script *i,* avec i = 1, 2, 3, ..., N, un emplacement d'évaluation sur la surface d'évaluation ;

   le sous-critère *j, y* $\geq$ 1 la j-ième propriété de cartographie ou aberration

   $V_{r\acute{e}el}(\Delta U_{s,j}(i))$ l'acuité visuelle qui est déterminée à l'aide d'une affectation et de la valeur réelle d'au moins une propriété d'imagerie du verre de lunettes à optimiser ou à évaluer au i-ème point d'évaluation, et

   $v_{cible}(\Delta U_{s,j}(i))$ désigne la valeur cible correspondante de l'acuité visuelle.

2. Procédé selon la revendication 1, dans lequel le calcul comprend une optimisation du verre de lunettes en minimisant ou en maximisant la fonction cible.

3. Procédé selon la revendication 1 ou 2, dans lequel le procédé comprend en outre :
   calcul d'au moins un faisceau lumineux émanant de l'objet pour au moins une direction de vision à l'aide d'un calcul de front d'onde, d'un calcul de rayon ou d'un calcul de champ d'onde à travers le système de verres de lunettes et/ou à travers le verre de lunettes à calculer ou à évaluer jusqu'à une surface d'évaluation dans le système de verres de lunettes.

4. Procédé selon la revendication 3, le procédé comprenant en outre :

   calcul de la différence, au niveau de la surface d'évaluation, du faisceau lumineux provenant de l'objet par rapport à un faisceau lumineux de référence convergeant sur la rétine d'un oeil modèle,
   détermination d'au moins une propriété d'imagerie ou d'aberration à l'aide de la différence calculée.

5. Procédé selon la revendication 3 ou 4, dans lequel le passage d'au moins un faisceau lumineux émanant de l'objet est effectué au moyen d'un calcul de front d'onde et dans lequel le calcul de la différence présente sur la surface d'évaluation comprend un calcul de la différence de front d'onde entre le front d'onde du faisceau lumineux émanant de l'objet et le front d'onde du faisceau lumineux de référence convergeant sur la rétine, la différence de front d'onde étant calculée sur la surface d'évaluation.

6. Procédé selon la revendication 5, comprenant en outre l'association d'un angle optique géométrique et/ou d'une forme carrée dans l'espace des angles optiques géométriques à la différence de front d'onde calculée, ladite au moins une propriété d'imagerie ou aberration dépendant d'au moins une composante de l'angle optique géométrique et/ou de la forme carrée.

7. Procédé selon l'une des revendications précédentes, dans lequel l'association de l'au moins une propriété de représentation ou aberration d'un système de verres de lunettes à l'acuité visuelle du porteur de lunettes dépend de manière paramétrique de l'acuité visuelle initiale mesurée et/ou de la sensibilité mesurée du porteur de lunettes, la sensibilité mesurée du porteur de lunettes correspondant en particulier à l'acuité visuelle du porteur de lunettes qui a été mesurée pour une correction erronée prédéfinie.

8. Procédé selon l'une des revendications précédentes, dans lequel l'association de l'au moins une propriété de représentation ou aberration du système de verres de lunettes à l'acuité visuelle est réalisée à l'aide d'une ou de plusieurs paires de valeurs mises à disposition parmi :

une valeur d'acuité visuelle de l'un des yeux du porteur de lunettes lors de la vision à travers le système de verres de lunettes et
une réfraction sphérique et/ou astigmatique du système de verres de lunettes est déterminée.

9. Procédé selon la revendication 8, dans lequel :

pour l'une des paires de valeurs, la puissance réfractive est donnée par la valeur de réfraction de l'un des yeux du porteur de lunettes, et/ou
pour l'une des paires de valeurs, la puissance réfractive est donnée par la valeur de réfraction de l'un des yeux du porteur de lunettes plus une nébulosité sphérique et/ou astigmatique, dans laquelle, en option, une distance dioptrique correspondant à la nébulosité par rapport à la valeur de réfraction d'un oeil modèle a une valeur comprise entre 0,5 Dpt et 3,0 Dpt.

10. Procédé selon l'une quelconque des revendications précédentes, dans lequel le système de verres de lunettes comprend un verre de lunettes et un oeil modèle, l'œil modèle étant décrit par au moins un des paramètres suivants : Longueur de l'œil, distances et courbures des surfaces réfringentes, indices de réfraction des milieux réfringents, diamètre de la pupille, position de la pupille.

11. Procédé selon la revendication 10, dans lequel au moins l'un des paramètres de l'œil modèle a été mesuré individuellement chez le porteur de lunettes et/ou est déterminé à partir de valeurs de mesure individuelles.

12. Dispositif de calcul ou d'évaluation d'un verre de lunettes pour un porteur de lunettes comprenant des moyens de calcul agencés pour calculer ou évaluer le verre de lunettes selon un procédé de calcul ou d'évaluation d'un verre de lunettes selon l'une des revendications 1 à 11.

13. Produit de programme informatique comprenant un code de programme conçu et agencé pour exécuter, lorsqu'il est chargé et exécuté sur un ordinateur, un procédé de calcul ou d'évaluation d'un verre de lunettes selon l'une quelconque des revendications 1 à 11.

14. Procédé de fabrication d'un verre de lunettes comprenant :

calculer un verre de lunettes selon le procédé de calcul d'un verre de lunettes selon l'une quelconque des revendications 1 à 11 ; et
fabriquer le verre de lunettes ainsi calculé.

15. Dispositif de fabrication d'un verre de lunettes comprenant :

des moyens de calcul ou d'optimisation adaptés pour calculer le verre de lunettes selon un procédé de calcul d'un verre de lunettes selon l'une des revendications 1 à 11 ; et
des moyens de traitement adaptés pour traiter le verre de lunettes conformément au résultat du calcul.

**Fig. 1**

Fig. 2

**Fig. 3**

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013104548 A1
- US 20040027679 A
- US 20160011437 A
- US 20120229758 A1
- WO 2015104548 A1
- DE 102017000772
- EP 2499534 A
- EP 2115527 B1

**In der Beschreibung aufgeführte Nicht-Patentliteratur**

- **DR. ROLAND ENDERS.** Die Optik des Auges und der Sehhilfen. Optische Fachveröffentlichung GmbH, 1995, 25
- **DIEPES, BLENDWOSKE.** Optik und Technik der Brille. Optische Fachveröffentlichung GmbH, 47
- **J. PORTER ; H. QUENER ; J. LIN ; K. THORN ; A. AWWAL.** Adaptive Optics for Vision Science. Wiley, 2006